# EUROPEAN PATENT SPECIFICATION

(11) **EP 4 275 266 B1**
(45) Date of publication and mention of the grant of the patent: **26.06.2024**
(21) Application number: 23713754.2
(22) Date of filing: 07.03.2023
(51) Int. Cl.: H02K 15/04, H02K 15/06

(54) **SYSTEM AND PROCESS FOR ASSEMBLING A STATOR OR ROTOR WINDING**
SYSTEM UND VERFAHREN ZUR MONTAGE EINER STATOR- ODER ROTORWICKLUNG
SYSTÈME ET PROCÉDÉ D'ASSEMBLAGE D'UN ENROULEMENT STATORIQUE OU ROTORIQUE

(30) Priority: 29.03.2022 IT 202200006170
(43) Date of publication of application: 15.11.2023
(73) Proprietor: Tecnomatic SpA, 64013 Corropoli (Teramo) (IT)
(72) Inventor: RUGGIERI, Giovanni, 64013 Corropoli (TE) (IT); MICUCCI, Maurilio, 64013 Corropoli (TE) (IT); RANALLI, Giuseppe, 64013 Corropoli (TE) (IT)
(74) Representative: Perronace, Andrea
(86) International application number: PCT/IB2023/052123
(87) International publication number: WO 2023/187502

(56) References cited:
- EP-A1- 3 771 078
- WO-A1-2018/233774
- WO-A1-2021/048394
- WO-A1-2021/156106
- IT-A1- RM20 100 371
- US-A1- 2009 265 909

## Description

The present invention relates to a system and a process for assembling a stator or rotor winding.

### Background art

It is generally known to make stators or rotors of electric machines, such as generators or electric motors, e.g., for applications on hybrid electric vehicles (HEVs), in which the stator or rotor winding consists of a plurality of bent bar conductors and variously interconnected to one another so as to realize electric windings also known as "bar windings". Said bent bar conductors are also referred to as "hairpin conductors" or simply "hairpins". The bar windings can be constituted by one or more groups of concentric windings, sometimes known as "crowns ", each group of windings being already a winding per se ("winding sets").

In particular, windings with hairpins having a circular cross-section (also said "rounded-wire conductors") or a rectangular cross-section, or even conductors with a variable cross-section geometry along the length (e.g., round conductors made rectangular in the part housed in the slot) are known in the prior art. In this regard, "rectangular" or "square" conductor wire means, in this description, a wire having four substantially flat sides, each joined to the adjacent sides, typically by a rounded edge. Bar conductors having a trapezoidal-shaped cross-section are known.

The aforesaid bar conductors are usually preformed by bending them in a "U"- or a "P" shape, starting from straight bar conductors. Patent US 7,480,987 describes an example of a method for preforming straight bar conductors to form hairpins. "U" or "P"-shaped preformed conductors, often also referred to as "preformed basic conductors" in the technical field, typically have two adjacent legs, of equal or different length, each provided with a free end portion and an opposite end portion, which is connected to the other leg by means of a bridge-like connecting portion. Since the end portions protrude when they are inserted into the rotor or stator, they will henceforth be referred to as the "free protruding portion" and "opposite protruding connected portion". The protruding connected portion can also be referred to as the "head portion" or "bridge-like connected portions". The whole of the "head portions" of the legs of the same hairpin forms the so-called "bridge-like connection".

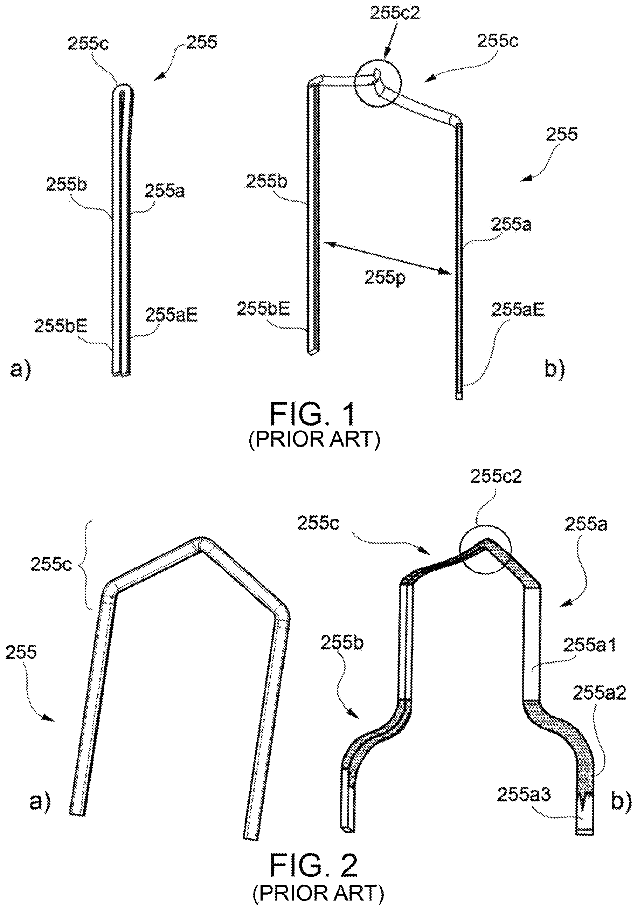

With reference to Figure 1(a), a hairpin 255 is preformed starting from a linear conductor (not shown) by bending it to form a first leg 255a with a corresponding free protruding end portion 255aE and a second leg 255b with a corresponding free protruding end portion 255bE. The bending shape forms, at the same time, a bridge-like connection 255c between the two legs 255a, 255b. The preformed hairpin, in this example, is in the shape of a flattened "U". To form a stator of an electric machine, for example, it is known to subject the "U"- or "P"-shaped preformed hairpins to two different types of twisting.

A stator or rotor core of a radial magnetic flux electric machine is substantially a ring having two flat faces and two cylindrical surfaces, having generators perpendicular to the two flat faces parallel to the rotation axis of the rotor of the electric machine. The radial, circumferential and axial directions hereinafter refer to the latter axis, unless otherwise specified. One of the two cylindrical surfaces is adjacent, at least in part, to the air gap of the electric machine, to which said stator or rotor belongs and defines a set of slots in which the straight parts of the winding are housed. The two flat surfaces are divided into the insertion surface or side and the surface or side opposite to the insertion side. The parts of the winding which protrude from said core are referred to as heads. The ends of the free portions of the conductors, which are mainly subject to welding, belong to the head protruding from the side opposite to the insertion side. If protruding portions connected in a bridge-like manner to the legs inserted into the stator slots are present in the winding, they belong to the head protruding from the insertion side. The portions protruding from the insertion side, either free or connected in a bridge-like manner, are indicated hereafter as portions protruding from the insertion side.

The stator or rotor core region between a slot and an adjacent one is referred to as tooth. The number of teeth is equal to the number of slots. The connecting part of the teeth of the core, which also defines a portion of each slot and is located relative thereto on the side opposite to the slot opening on the air gap of the machine, is referred to as a yoke.

The slot can be divided into an array of positions in each of which a leg of a basic conductor can be placed. The conductors housed in the same radial position of the slots define a so-called winding layer.

In a first type of twisting, also referred to as "insertion side twisting", the preformed basic conductors are appropriately inserted into corresponding radially aligned pockets or "slots", which are provided in a twisting device adapted to deform such conductors after insertion. The twisting device is substantially used to "spread" the legs of the "U" or "P" shape so that the two legs of each conductor, after having extracted the latter from the device, can then be inserted into a corresponding pair of slots of a stator core, which are mutually angularly offset by a predetermined distance, substantially equal to the angular distance between the slots in which the legs are then inserted, and radially spaced apart by the radial distance between the slot positions occupied by the legs, respectively.

Starting from a preformed hairpin, for example, but not exclusively, as shown in Figure 1(a), a hairpin of suitable shape for its insertion into the stator (or rotor) is formed by spreading the legs 255a, 255b and shaping the bridge-like connection 255c, e.g., to obtain the shape in Figure 1(b). Reference numeral 255p indicates the pitch of the hairpin, i.e., the linear distance or the angular distance, or the distance in terms of slot pitches, between the legs. It is worth noting that in this case, the central top 255c2 of the formed hairpin is the basic conductor in which the section of the conductor is subjected to a 180° rotation with respect to the median surface of the hairpin (the surface which passes inside the hairpin and includes the two legs). Such a rotation is useful in some layered hairpins, which will be defined hereafter to the end of transposing the layers (exchange of slot positions) thus reducing eddy currents circulating through the ends of the layers when they are welded together, compared with the case in which the same layers run parallel without exchanging slot position in the transition from one leg to the other.

The patent application published under US 2009/0178270 discloses an example of a twisting method from the insertion side for the twisting, at a uniform pitch, of the preformed bar conductors after having inserted them into the pockets of a twisting device, in which the hairpins have a rectangular cross-section.

According to the prior art and with reference to Figure 2, the hairpins can also be obtained by molding, a process in which a straight conductor is pressed against a backing member in a punch-and-die type system. Figure 2(a) shows such a molded conductor; it does not have a cross-section, which rotates with respect to the median surface of the hairpin.

This molded hairpin or even a preformed and spread hairpin, obtained as described above, can be subjected to the so-called "welding side twisting", in which case it is possible to introduce a "step-like" shape of the protruding portions of the legs 255a and 255b, in which, for example, the leg 255a has a first straight portion 255a1, a step-like portion 255a2 and a second straight portion 255a3 (substantially corresponding to portion 255aE in Figure 1), as in Figure 2(b).

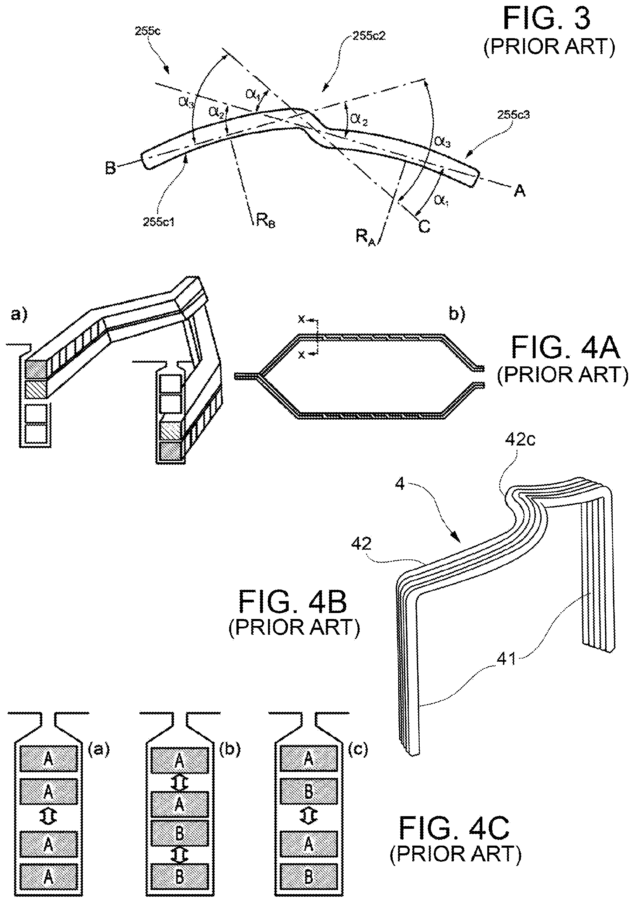

With reference to Figure 3, the shape of the protruding portion on the insertion side, i.e., of the bridge-like connection 255c, for a molded hairpin, can comprise three portions 255c1, 255c3, and 255c2 starting from the connection to the second leg 255b and ending at the connection to the first leg 255a (hidden from view in Figure 3). The portion 255c1 has a main extension direction B and a curvature radius RB, the portion 255c3 has a main extension direction A and a curvature radius RA, the portion 255c2 has a main extension direction C (and possibly a curvature thereof, not indicated). Hereafter, the portion 255c2 is referred to as the "layer change bend"; indeed, by virtue of it, the head and leg portions of the hairpins are on different layers when they are inserted into the respective slots of the stator pack. Reference α1 indicates the angle between the directions A and C, reference α2 indicates the angle between directions A and B and reference α3 indicates the angle between directions B and C, equal to the sum of the angles α1 and α2. This is only one of the final possible shapes of a hairpin, all other shapes with different portions and conformations of both the bridge-like portion and the legs can be used with the apparatus and a method according to the present description.

There are also conductors defined as "reverse" conductors (not shown), and they are hairpins with a bending direction in the bridge-like connection opposite to that of most hairpins that form the same winding. These are used to go from the last layer of one crown to the first layer of the next crown.

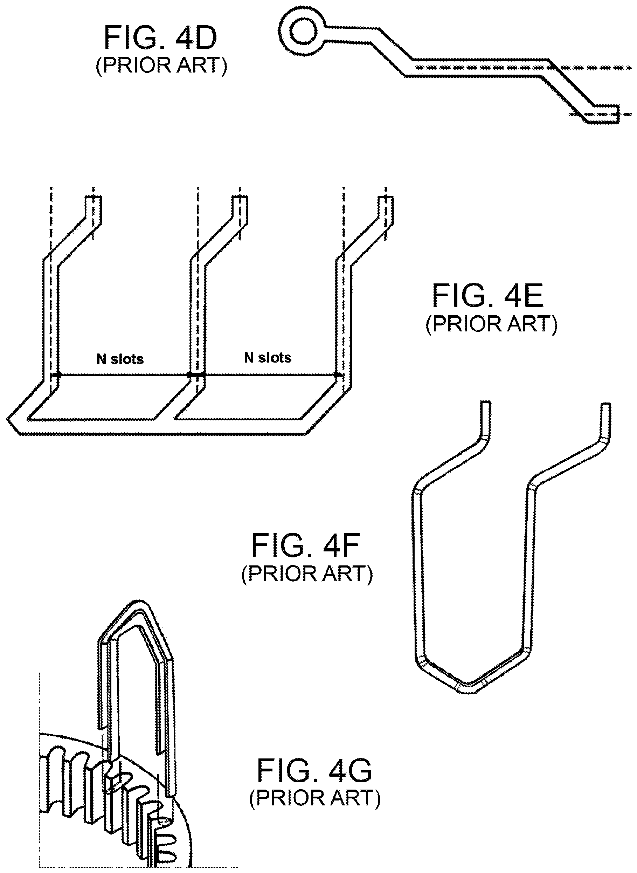

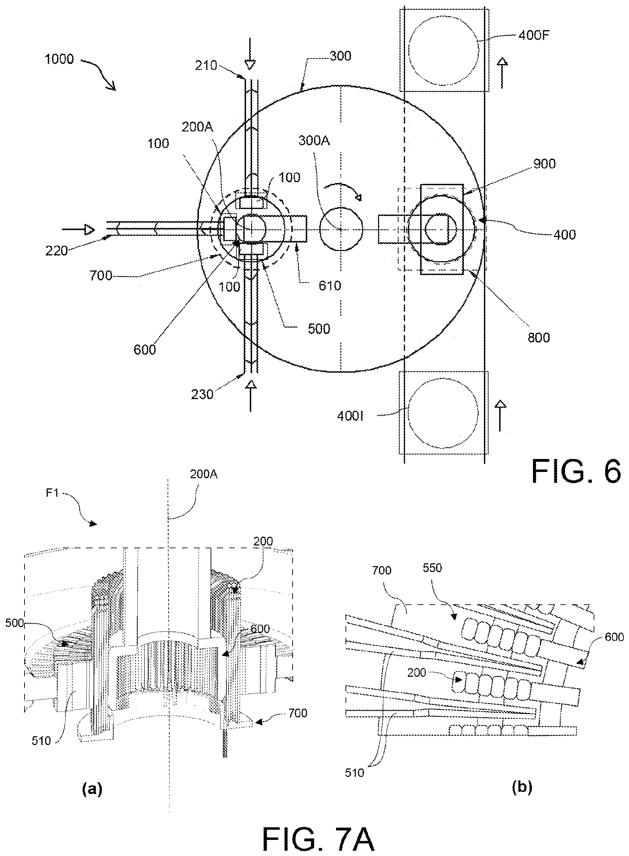

Furthermore and with reference to Figure 4A, there is a layered ("stranded") hairpin with a reversal of the cross-section at the bending point (Figure 4A(a)), which causes the exchange of the position occupied by the layers. As can be seen from the type of hatching of the cross-section in Figure 4A(a), by virtue of said reversal or exchange of position, the upper layer in the pair of layers in the left slot is below the other one in the right slot. In another hairpin shape, the transposition can be continuous along the hairpin portions housed in the slot (Figure 4A(b); US 3837072). The variant shown in Figure 4B is a layered hairpin free from reversal, shown in patent US8552611 B2. Figure 4C (taken from Figure 6 of Patent US 6,894,417 B2) shows the variants of the arrangement of the legs of the layered hairpins in a double-crown winding in different positions in the slot. Reference letters A and B indicate the crown to which the legs (belonging to different hairpins) shown in the slot belong.

Furthermore, there are conductors referred to as "I-pins", i.e., a conductor to be housed in a single slot and, when in the slot, having the portions with free ends protruding from both flat faces of the stator core. Figure 4D shows an example of an I-pin, which does not necessarily have to have all the direction changes shown, it can also have none, and be bent from the output side of an assembly drum of the hairpin winding. The ends of the I-pin can be welded to ends of other conductors protruding from the slots or to third-party elements (e.g., bus bars, eyelets) or they can serve as phase terminals. The portions can be subject to the "welding side" type bending. An example of an I-pin can be found in the conductors indicated with references 81-83 in document US7622843B2. "W-shaped conductors" are also known, see for example, again, patent US 7,622,843 B2 and Figure 4E. A W-shaped conductor can be formed by welding a molded hairpin with one I-pin or by welding a fourth conductor to three I-pins. Once again, the W-pin does not necessarily have to have all the direction changes shown, it can also have none, and be bent from the output side of the assembly drum of the hairpin winding.

With illustrative reference to Figure 4F (obtained from US10749399B2), there is also the so-called "inversion hairpin," i.e., a hairpin which can be formed by spreading the legs (not with the insertion-side twisting method described above) or molded with "press and die" systems, characterized in that the legs in their respective slots occupy the same radial position, i.e., belong to the same layer. Therefore, its ends will be bent in the same direction on the twisting side. Actually, the protruding portions on the side of the bridge-like connection can be bent in the same tangential direction or can take the V shape. At least two layer-change bends can be required on the connecting portion.

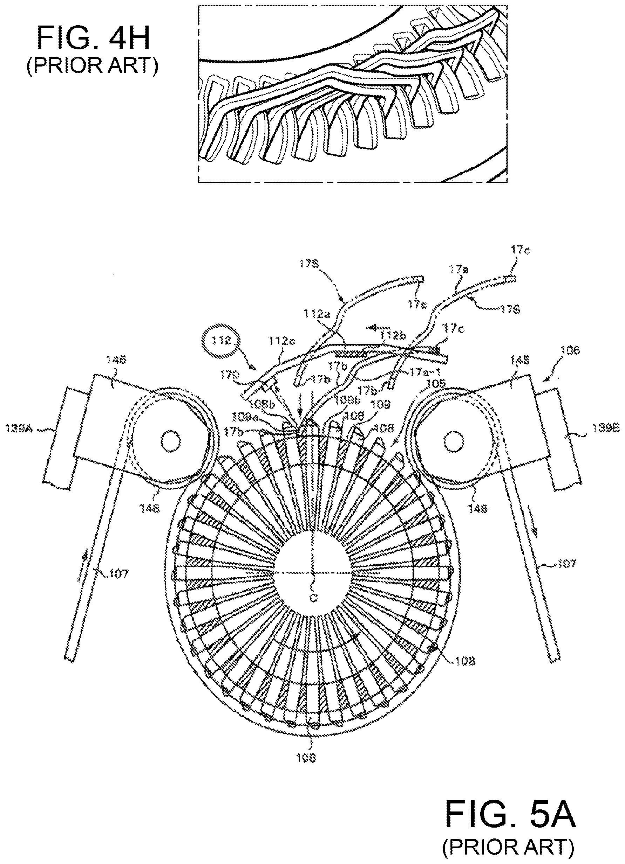

Finally, there are hairpin pairs whose homologous legs belong to different layers (Figure 4G) or to the same layer (Figure 4H) and they are configured and sized to be overlapping.

Hereafter, all the hairpin types, as well as the I-pins and the W-pins will be included in the definition of "basic conductors".

After having been subjected to the first type of twisting or after having been molded, the basic conductors are typically pre-assembled in a winding set, as mentioned above. The pre-assembly apparatus will have a set of slots, generally in number equal to the slots of the stator associated with the winding, into which the legs of each hairpin are to be inserted, and it will generally be different from the twisting device.

The winding set is then inserted in bulk into the slots of the stator core through a first side thereof (so-called "insertion side" or "insertion face") with the respective free portions protruding from a second side of the core (so-called "welding side" or "connection side" or "welding face" or "escaping face") opposite to the first side.

Based on the specific winding pattern to be achieved, the free portions of the basic conductors protruding from the side opposite to the insertion side can thus be subjected to a second type of twisting, also referred to as "twisting from the welding side", e.g., after having been inserted into pockets made in an appropriate twisting fixture. Here, the twisting fixture has the purpose of bending or twisting the free portions of the conductors to appropriately shape such free portions and thus allowing the appropriate electric connections to be achieved between the conductors to complete the winding. Patent application published under number US 2009/0302705 describes an example of a twisting method from the welding side of the type discussed above.

Assembly systems of electric winding for stators and/or rotors are known. Systems for transferring the winding and inserting it into a stator pack are also known.

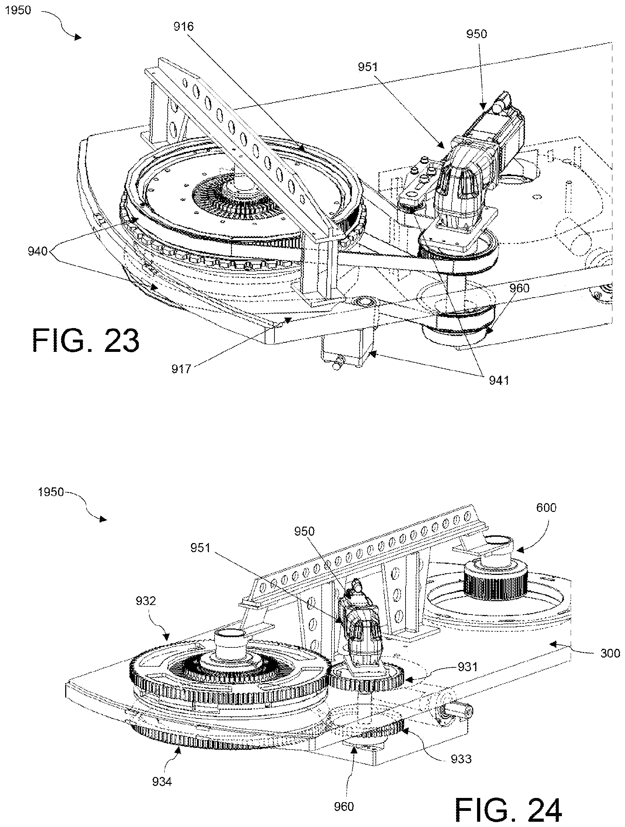

With reference to Figure 5A, Odawara's patent application US2019/0190359 describes a system of forming basic conductors and subsequently assembling them into a winding, which is then inserted into the stator, within a single equipment. The Odawara's application mainly describes the basic conductor forming section, and not the winding assembly and insertion section. However, for the latter, it mentions "guiding means", which are shown for example in Figure 24A of Odawara's application with reference numeral 112, which is reproduced in this description as Figure 5A. The Odawara's application describes the following parts:
- the in-line forming (albeit with partial rotations of some elements) of the basic conductors;
- the sliding guide means 112;
- the radial approach of the basic conductors 17S; and
- the fact that the drive gear 123 of the cylinder 900 has a larger diameter than the latter.

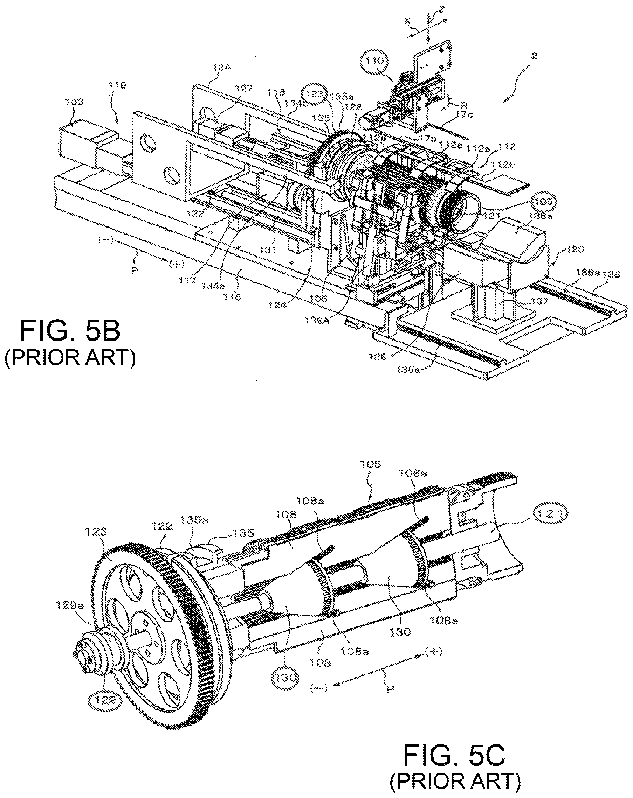

Furthermore, with reference to Odawara's Figure 29 (Figure 5B of the present description), it is apparent that the gear mechanism 123 is such as to ensure the rotation precision of the drum by the servomotor (see paragraph 205 of the mentioned application) and thus is essential to Odawara's solution.

Furthermore, the blade movement mechanism 108 of the cylinder has a rotary axis 121, which sets the cams 130 in motion, and which must be axially actuated by acting on another element 129 connected to the axis 121, and not on the wheel 123 (Figure 31, shown here as Figure 5C). The wheel 123 and the ring gear 135 are adapted to extract the winding and thus must have a larger radius than the drum and blades, despite being arranged in axis. Said mechanism requires the insertion of the hairpins in the radial direction.

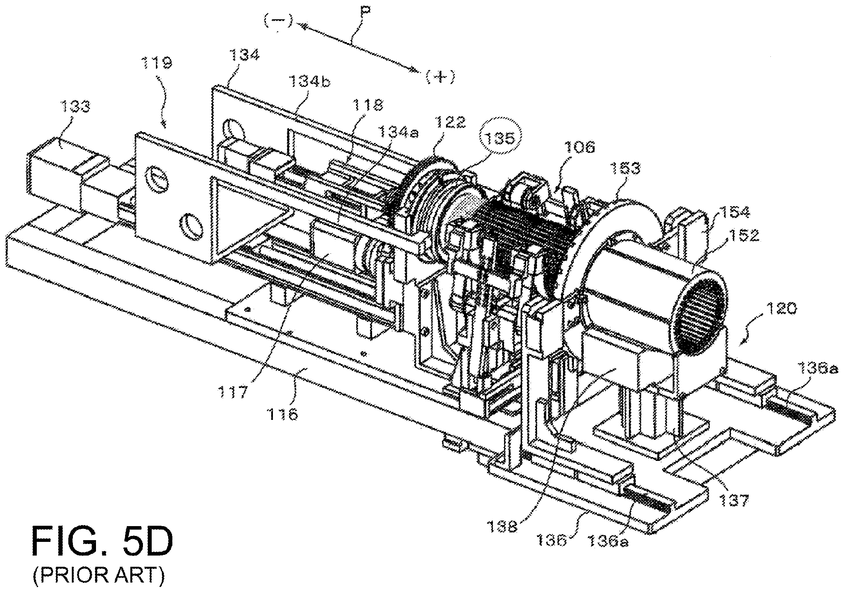

Indeed, in Odawara's patent, the insertion system into the stator requires a thrust ring gear 135, as shown in the corresponding Figure 34 and Figure 5D of the present description.

This overall configuration has several disadvantages, including that the hairpin insertion is performed with a movement approaching the drum with radial and circumferential components. The co-presence of such two movements makes a confining system of the first leg (non-gripped leg) of the hairpin, which can keep up with an excessively high hairpin forming cadence (e.g., 1.5s), extremely difficult. Furthermore, in the prior art, there is low accuracy of insertion of the hairpin legs into the assembly drum due to the type of movement thereof (in some cases with both radial and circumferential movement). It is also worth noting that in the prior art, there is a high possibility of undesired leg movement in the drum slots (with possible escaping) because Odawara's guide must remain at a distance from the drum (at least temporarily) for the radial insertion of the basic conductor to be possible. Even adding standard confinement, it would be necessary to complicate the rest of the apparatus to preserve the aforesaid movement.

Application ITRM20100371A1 describes a twisting apparatus, comprising a rotary table adapted to move a twisting device between various work stations and, in particular, between a preformed basic conductor loading station, a subsequent special conductor loading station, a twisting station, and an extraction station. The conductors treated by this apparatus are indeed those that are preformed or "P"-shaped, as shown above. In any case, these conductors are formed and extracted from the apparatus and only then inserted into a stator pack to form a winding. The insertion is mentioned but not covered in the apparatus described by that patent document, which indeed does not explain the methods. The apparatus is not adapted to form the winding outside the stator pack and then insert the entire winding into the stator pack.

Application US2009265909A1 describes an apparatus in which preformed basic conductors can also be twisted all together and then extracted all together for later insertion into the stator pack. This extraction is done by vertically pushing the conductors from the side of their free legs. However, this thrusting and pulling are very complicated and time-consuming, requiring a gripping apparatus, which comprises a set of double fingers equal in number to the slots, stabilizing plates, and other elements all rotated to trap the hairpin legs in a defined position for the insertion into the stator. The gripping apparatus is then moved to the same side as the extraction and lowered above the stator. But this operation is not the last, because the winding still needs to be made to go up again to release the gripping apparatus and in particular the aforesaid fingers. In this manner, the winding remains high above the stator input plane, and additional thrusting means from above are required to complete the insertion. As a result, although US2009265909A1 describes an assembly and an in-stator insertion in the same apparatus, many complicated, time-consuming, costly, and material-intensive means are needed, and many different operating steps are required, and the winding hairpins are not well-calibrated, not to mention that the windings that can be treated are only those that can be made by a simultaneous twisting, which is only a subset of the possible windings.

The need is felt to assemble the entire winding on one system, with no limitations with respect to the type of assembly, and then easily and reliably insert it into the stator pack, without complicated and expensive mechanisms, pursuing the cycle time and accuracy specifications, which are increasingly stringent nowadays.

### Purpose and object of the invention

It is an object of the present invention to provide a process and system for assembling a stator or rotor winding which solves the problems and overcomes the drawbacks of the prior art, in all or part.

It is an object of the present invention to provide a process and a system for assembling a stator or rotor winding according to the appended claims.

### Detailed description of examples of preferred embodiments of the invention

### List of figures

The invention will now be described by way of non-limiting example, with particular reference to the figures of the accompanying drawings, in which:
- Figure 1 shows a flattened "U"-shaped preformed hairpin in (a) and a formed hairpin in (b), according to the prior art;
- Figure 2 shows in (a) molded conductor and in (b) a conductor after having been subjected to twisting on the welding side;
- Figure 3 shows a top view of the hairpin in 2(a), according to the prior art;
- Figure 4A shows a layered ("stranded") hairpin with cross-section reversal at the bending point in (a) and with continuous transposition along the hairpin portions housed in a slot in (b), according to the prior art;
- Figure 4B shows a type of layered hairpin;
- Figure 4D shows an example of I-pin, according to the prior art;
- Figure 4E shows an example of "W-pin," according to the prior art;
- Figure 4F shows an example of an "inversion hairpin," according to the prior art;
- Figure 4G shows an example of overlapping hairpins on different layers, according to the prior art;
- Figure 4H shows an example of overlapping hairpins on the same layer, according to the prior art;
- Figures 5A-5D correspond to Figures 24A, 29, 31, 34 of Odawara's patent application US2019/0190359, where some elements commented on above have been circled;
- Figure 6 shows a first draft of the layout of the assembly and insertion system for assembling and inserting a winding into a stator, according to an aspect of the invention;
- Figure 7A is an example of assembly of the winding with a single circular containment, a perspective cutaway view in (a), and a section view perpendicular to the winding axis in (b), according to an aspect of the invention;
- Figure 7B an example of winding tightening, a perspective cutaway view in (a) and a section view perpendicular to the winding axis in (b), according to an aspect of the invention;
- Figure 7C shows an example of the transfer of the winding into the pack, according to an aspect of the invention;
- Figure 7D shows a partial opening of the circular containment, according to an aspect of the invention;
- Figure 7E shows an example of thrusting the winding into the pack, according to an aspect of the invention;
- Figure 7F shows a complete opening of the circular containment, according to an aspect of the present invention;
- Figure 8 shows an assembly solution with multiple circular containments according to an aspect of the invention;
- Figure 9A shows an example of a winding assembly with multiple circular containments, a perspective cutaway view in (a), and a section view perpendicular to the winding axis in (b), according to an aspect of the invention;
- Figure 9B shows a re-compacting of the winding, according to an embodiment of the invention;
- Figure 9C shows tangential tightening according to an embodiment of the invention;
- Figure 9D shows a separation of the inner containment;
- Figure 9E shows a transfer of the winding into the pack;
- Figure 9F shows an opening of a lower circular containment;
- Figure 9G shows an opening of a central circular containment;
- Figure 9H shows an opening of an upper circular containment;
- Figure 10 shows the possible movements of a circular containment;
- Figure 11 shows a movement of the cam from outside the diameter of the hole, an action that would lead to a collision with surrounding parts;
- Figure 12 shows a bottom view of the table with the circular containments;
- Figure 13 shows a drive assembly - front view;
- Figure 14 shows a disengaged drive assembly - section view;
- Figure 15 shows an inserted drive assembly - section view;
- Figure 16 shows a principle diagram of a first embodiment of the invention;
- Figure 17 shows a principle diagram of a third embodiment of the invention;
- Figure 18 shows an overall chosen solution for winding assembly and transfer into the stator pack;
- Figure 19 shows a rotary table assembly - section view;
- Figure 20 shows an embodiment of a circular containment;
- Figure 21 shows a detail of the containment wall;
- Figure 22 shows an inner containment support assembly;
- Figure 23 shows an example of a motor unit for movement in a circular containment, with belt transmission;
- Figure 24 shows an example of a motor unit for movement in a circular containment, with gear transmission;
- Figure 25 shows an example of a pneumatic clamping assembly of a circular containment;
- Figure 26 shows a support surface assembly with an electrically adjustable lift;
- Figure 27 shows a winding thrust assembly in the pack; closing step (in (a)) and thrusting step (in (b)); and
- Figure 28 shows a base frame assembly.

It is worth noting that hereinafter elements of different embodiments can be combined together to provide further embodiments without restrictions respecting the technical concept of the invention, as a person skilled in the art will effortlessly understand from the description.

Furthermore, the present description also refers to the prior art for the implementation thereof, as for detail features not described, such as elements of minor importance usually used in the prior art in solutions of the same type, for example.

When an element is introduced, it is always understood that there can be "at least one" or "one or more".

When a list of elements or features is given in this description, it is understood that the finding according to the invention "comprises" or alternatively "consists of" such elements.

When listing features within the same sentence or bulleted list, one or more of the individual features can be included in the invention without connection to the other features in the list.

### Embodiments

Figure 6 shows an example of the arrangement 1000 of components for the assembly of a winding 200 (not shown in the figure) and its transfer into a stator pack 400. The input stator 400I is initially empty. The winding is assembled on a rotary table 300 on the left while the stator is moved along the linear path shown by the arrows on the right. Of course, the positions can also be reversed and not at 180°. Then, the rotary table 300 is rotated (e.g., clockwise as shown by the arrow) about the axis 300A (exiting the sheet) until it encounters the empty stator 400I in the middle position (or generally other convenient position) along its path, in which the winding is inserted. Thus, a stator pack with inserted winding 400F is obtained at the output. The rotary table 300 allows simultaneously working on two stations, one for assembling the winding and the other for transferring into the stator pack, thus reducing the production cycle time.

The elements composing the system include:
- one or more removable inserter(s) 100 (or "removable insertion means"), capable of housing the various basic conductors from respective feeding means 210,220,230, which can start from the assembly area and insert them serially one by one into the circular containment (continued);
- a circular containment 500 (or "circumferential containment means"), configured to contain the basic conductors when assembling the winding and then align them appropriately so that the winding has sufficient precision to ensure its insertion directly into the stator pack; the circular containment is conveniently housed in a corresponding hole in the rotary table;
- optionally, a basic conductor support surface 700, located under the rotary table 300, the support surface 700 sustaining the basic conductors from below when assembling the winding;
- a thrust assembly 800, which presses the stator pack from below to let the winding enter into the stator pack up to a given height; and/or
- a movement assembly 900, configured to lower the winding by thrusting it from the side of the basic conductor heads until the basic conductor terminals enter into the slots typically by a few tens of millimeters; and
- optionally, a support 610 of an inner containment 600 useful for the winding of the assembly.

The respective feeding means 210,220,230 can supply the basic conductors of the layers 1 and 2 (210), the basic conductors of the layers 3 and 4 (220), and the basic conductors of the layers 5 and 6 (230), respectively.

The choice of a rotary table allows compacting the system, being capable of utilizing, as will be seen, the spaces above and below the table (i.e., on the side of a first table surface, and on the side of a second table surface opposite to said first table surface). Furthermore, it allows improving the cycle time, because during the insertion of a winding into the respective stator pack, progress can be made with the assembly of an additional winding to be inserted into a further stator pack.

Furthermore, it must also be specified that the inserter cannot also insert all the basic conductors of the winding before it is transferred by rotating the table. The missing basic conductors can be inserted into an intermediate station (not shown) and/or into the insertion station in the stator pack before the insertion itself into the stator pack.

Again, the arrow which illustrates the feeding of the stator pack 400I identifies an arbitrary, albeit preferred, feeding direction. The stator pack can be fed to the winding insertion position from any direction and in any manner, as long as the stator pack is supplied from the side of the table opposite to the side of the inserter 100.

The inserters 100 (not shown in detail) can be of various known or unknown types because they intervene from the outside and do not affect the containment and insertion of the winding. Preferably, the inserter is positioned above the circular containment which will be illustrated, thus on one side of the table only.

### Circular containment

A first function of the circular containment 500 is to sustain the basic conductors laterally and externally when assembling the winding. This is done by making use of a containment with circumferential geometry having as many walls as the slots in the stator pack so as to recreate a pack-like structure. However, as will be seen, the slots formed by the walls of the circular containment have a variable width due to the radially variable cross-section of the walls. This allows spreading the crowns needed to assemble the winding.

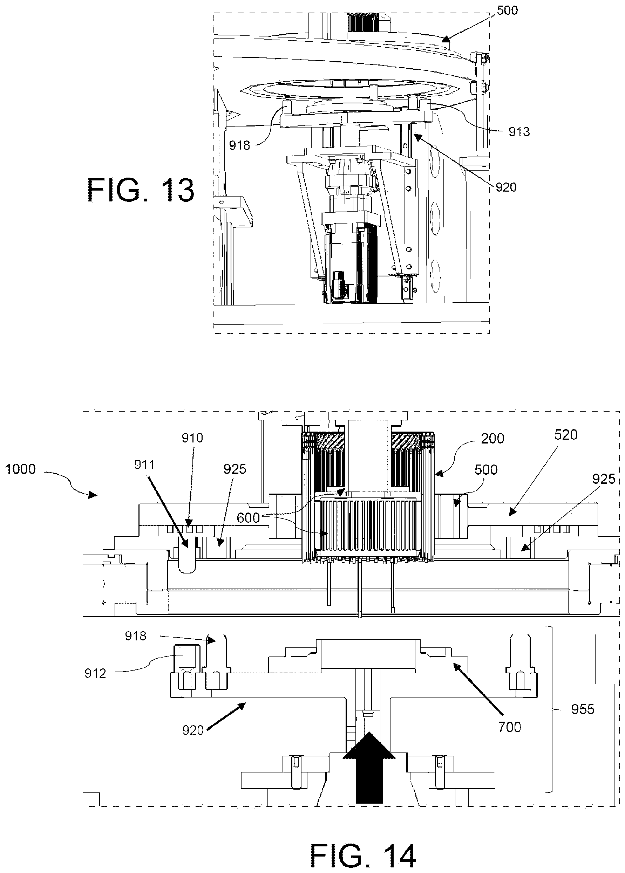

For the radial movement of the walls, as will be illustrated with reference to Figure 14, cams 910 are provided in the circular containment, which indeed moves the walls in radial directions.

A second function of the circular containment 500 is to hold in place (calibrate) the winding during the rotation of the table (transfer) and a third function of the circular containment is to organize and align the conductors of the transferred winding for the insertion into the stator pack.

Multiple circular containments (collectively "circumferential containment means") can be used at the same time, as illustrated hereafter.

The circular containment 500 can be handled by means of a dedicated circular motion transmission system 917 shown in Figure 23.

### Use of a single circular containment

This solution provides that the containment and gripping system (or "circular containment" or "circumferential containment means") of the winding can comprise (Figure 7A):
- A circular containment 500 with fingers or positioners 510 of predetermined length and radially variable thickness, the function of which is both containment and calibration, as mentioned above;
- Optionally, an inner containment 600, the function of which is to act as a reference abutment for the winding inner diameter 200; and
- Optionally, a support surface 700, provided with possible notches for the basic conductors longer than the standard basic conductors and possibly equipped with edges to prevent the basic conductors from escaping, the support surface being placed on the side of the table opposite to the side of the inserters 100, but still in the assembly position.

An example of an operation with successive work steps is now illustrated, in which advantageously all the elements just listed are used, although some are optional as indicated.

Step F1 shown in Figure 7A consists in the assembly of the winding with a single circular containment 500. Initially, the circular containment 500 is in the winding assembly position, the support surface 700 is lifted, and the inner containment 600 prevents the basic conductors from moving inward. In this step, a set of basic conductors is inserted into the slots 550 of the circular containment 500 on the side of the free ends of the basic conductors, and with each insertion, the circular containment 500 will rotate (by one or more slot pitches defined as the angular distance between the slots, by appropriate rotation means about the winding axis 200A) carrying the winding being assembled therewith. The assembled winding will be obtained at the end.

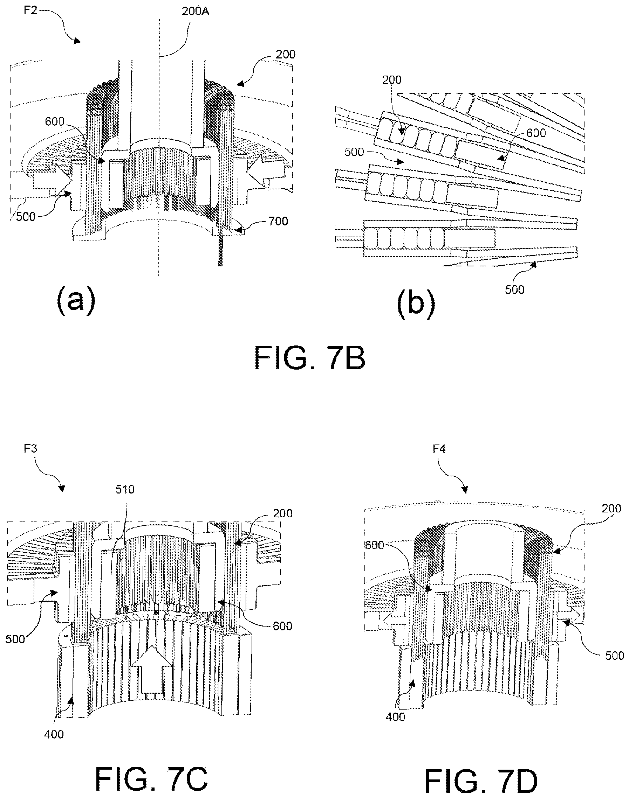

Step F2 shown in Figure 7B consists in the tightening of the winding: the circular containment 500 thrusts the basic conductors radially against the containment because its section (orthogonal to the axis 200A) is tapered at least partially, the support surface 700 remains lifted, in turn the inner containment 600 remains in place and acts as an abutment for the basic conductors.

The basic conductors can be tightened radially (e.g., by means of a shoulder, described below) and/or tangentially, depending on wall thickness. Indeed, in general, tangential tightening is best suited when the insulating paper (usually used in the technical field) is 'S'-shaped, double 'S'-shaped, 'B'-shaped or, more generally, when the paper crosses the slot internally because a radial distance between conductors belonging to the same slot must be ensured.

Radial tightening, on the other hand, works well when the paper is of the 'O' type or, in general, when the insulation is only at the edges of the slot because the circular containment compacts the conductors together and thrusts them against an inner abutment. Tangentially, the walls of the positioners can align the conductors so that they do not protrude beyond the area of the slot (minus that of paper).

Step F3, shown in Figure 7C, consists in the insertion of the winding into the stator pack by suitable introduction means. The rotary table 300 (shown in Figure 6) takes the circular containment with the winding over the stator pack 400 with a rotation around the rotary table axis 300A, and the stator pack is lifted (or the winding is lowered) until the basic conductors are inserted (e.g., for about 10-20 mm) into the corresponding slots of the stator pack. In general, the rotary table takes the circular containment means from an assembly position to an insertion position in the stator pack. Conveniently, the stator pack is taken to the insertion position by special feeding means from the side of the rotary table opposite to the side in which the inserters are in the assembly position.

Step F4, shown in Figure 7D, consists in the partial opening of the circular containment 500 (radially). While the stator pack 400 is stationary, the positioners 510 of the circular containment 500 move back slightly to create some clearance between the walls and the basic conductors.

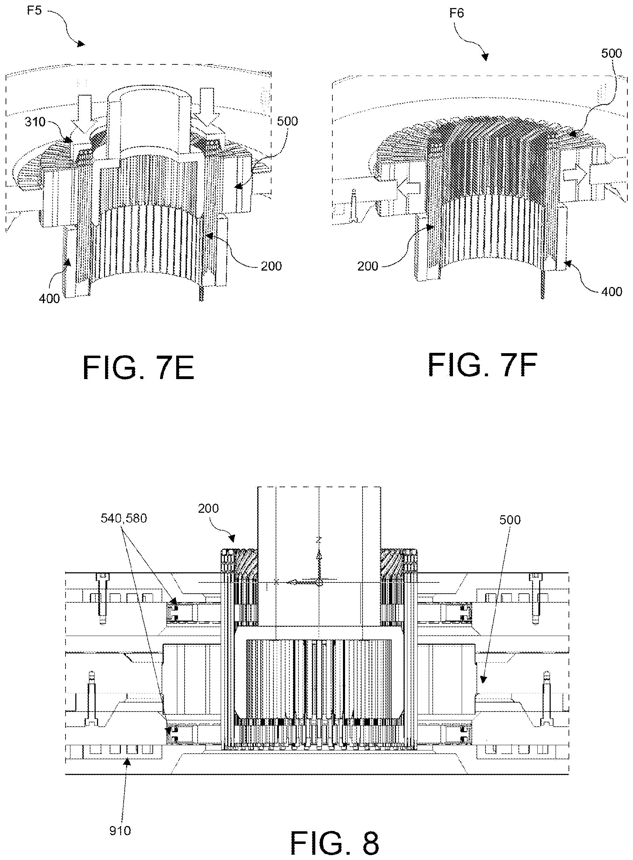

Step F5, shown in Figure 7E, consists in the thrusting of the winding into the pack. While the stator pack 400 is stationary, e.g., an upper abutment 310 thrusts the basic conductors into the stator pack itself.

Step F6, shown in Figure 7F, consists in the wider or fuller opening of the circular containment 500; the stator pack 400 is stationary, the circular containment opens, and the inner containment 600 (not shown in the figure) rises.

Using only one circular containment is possible and has the advantage of having fewer components and smaller footprint.

### Use of multiple circular containments

To better control the winding and to reduce the radial travel of the circular containment 500, other circular containments can be used, which preferably take care of the tightening of the winding. With reference to Figure 8, it is advantageous for the additional circular containments 540,580 to be placed immediately below and immediately above the circular containment already described. An example of the use of multiple circular containments in successive work steps is described below. It is to be understood that even one additional circular containment can be used, as illustrated above, and resumed hereafter.

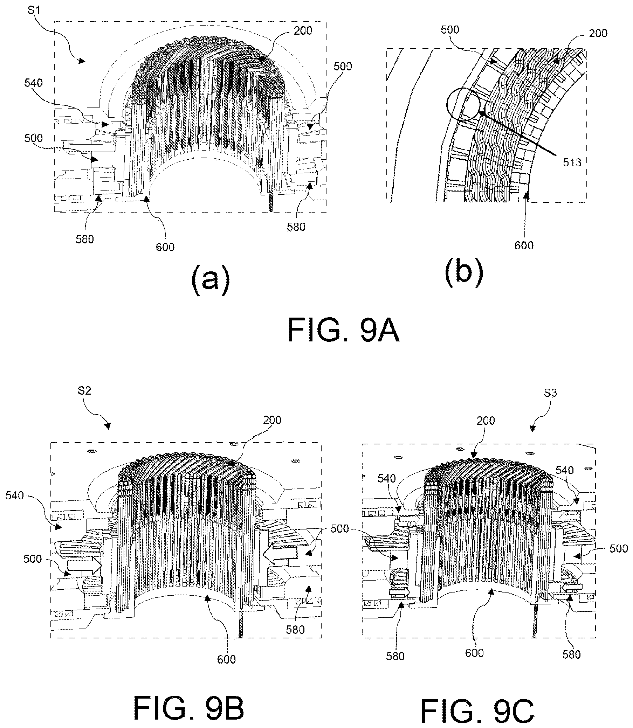

Step S1, shown in Figure 9A, consists in a tangential tightening: the upper and lower circular containments 540,580 are fully retracted, the middle circular containment 500 is in the assembly position, and the support surface 700 (optional, not shown in this figure) is lifted to sustain the basic conductors.

At this step, all the expected basic conductors are inserted one by one, and with each insertion the central circular containment 500 rotates, taking the winding 200 therewith. Step S1 ends with the assembly of the entire winding 200. The tangential shoulders 513 for radial compacting can be present in one or both of the lower and upper 540,580 circular containments (Figure 9A(b)).

Step S2, shown in Figure 9B, consists in a compacting of winding 200. At this step, the circular containments 540,580 are fully retracted while the central circular containment 500 advances and compacts the basic conductors radially against the containment 600; the support surface 700 is lifted.

Step S3, shown in Figure 9C, comprises the advancing of the lower and upper circular containments 540,580 until the basic conductors are tightened tangentially, the circular containment 500 thrusts and compacts the winding against the containment 600 as in step S2, and the support surface 700 remains lifted in the containment position (always not shown).

As for the radial movement of the positioner 510, in order to compensate for manufacturing tolerances of both the positioner and the basic conductor and thus ensure optimal positioning of the basic conductors in the containment, elastic means (e.g., springs) positioned behind each positioner 510 can be used (elastic means are not shown in the figures).

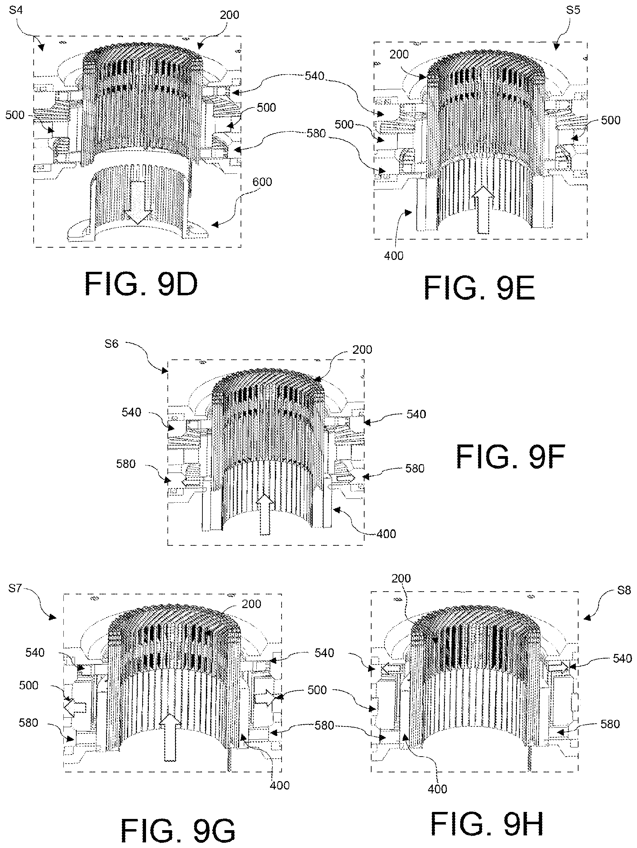

Step S4, shown in Figure 9D, comprises the separation of the inner containment 600 while the winding is still in the assembly position on the left in Figure 6. At this step, the tangential circular containments 540,580 are tangentially thrusting the basic conductors while the circular containment 500 is as in step S2, finally the support surface 700 (not shown in the figure) lowers.

Step S5, shown in Figure 9E, concerns the insertion of the winding 200 into the stator pack 400, then after the rotary table has taken the winding from the assembly position to the insertion position (e.g., 180°, but other positions are also possible according to the concept of the invention, e.g., four 90° positions).

At this step, the winding is positioned over the stator pack, the upper and lower circular containments 540 and 580 are gripping, the middle circular containment 500 is located as in step S2, and the stator rises and houses the basic conductors (by means of their free ends).

Step S6, shown in Figure 9F, comprises the opening of the lower circular containment 580. At this step, the upper circular containment 540 is gripping, the middle circular containment 500 is as in step S2, while the lower circular containment 580 retracts and the stator 400 is lifted and continues the insertion.

Step S7, shown in Figure 9G, comprises the opening of the central circular containment. At this step, the upper circular containment 540 is gripping, the lower circular containment 580 is retracted, while the central circular containment 500 retracts and the stator 400 rises and continues the insertion.

Step S8, shown in Figure 9H, consists in the opening of the upper circular containment 540. At this step, lower circular containment 580 and the circular containment 500 are retracted, while the upper circular containment 540 retracts and the stator 400 rises and continues the insertion. In this manner, the winding is inserted into the stator pack, which becomes the complete stator pack 400F (i.e., the stator before twisting and welding the inserted winding) of Figure 6, from where the stator pack is driven by appropriate removal means, which can form a single assembly with the feeding and/or positioning means.

Consequently, according to the invention, one or more circular containments can be used according to the height of the stator pack; for packs with limited height, only one circular containment can be used; for packs with high height, it is preferable to use several circular containments for uniform containment along the height of the winding.

### Comparison of some possible solutions for the assembly and insertion system

For the study of the entire assembly and insertion system, the starting point has been the movement of circular containment and in particular the analysis of the necessary automation. Indeed, it has been found that, by using a rotary table to move the winding from the assembly work station to that of insertion in the stator pack, different configurations are possible by arranging the components either outside the rotary table or integral therewith.

As for the assembly of the winding itself, it is possible to act in two ways, for example: in the first case, it is possible to hold the circular containment fixed and rotate the inserter about the axis of the winding while inserting the basic conductors; in the second case, it is possible to hold the inserter fixed and rotate the circular containment below it.

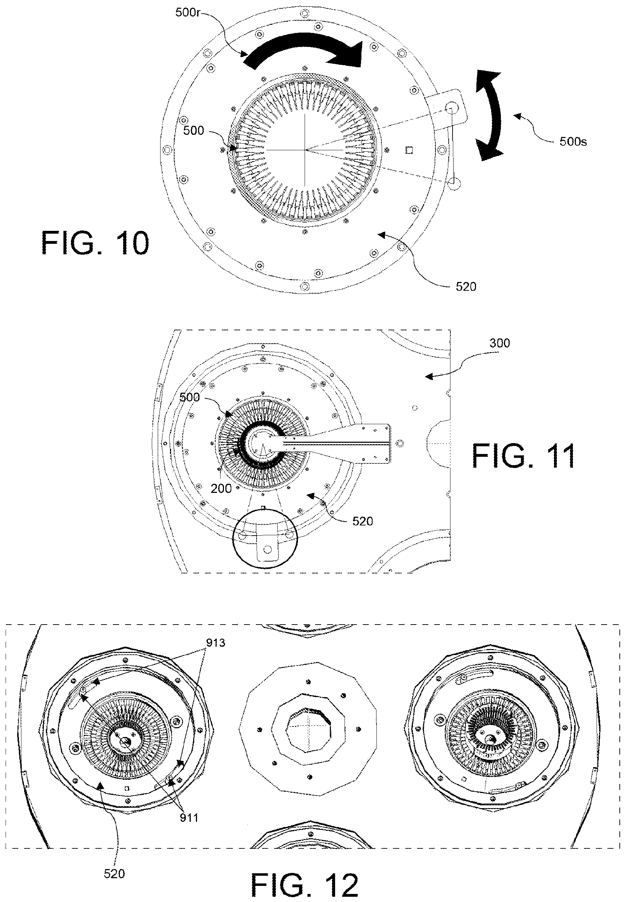

Since the inserter normally has a structure which does not allow it to be easily rotated about the entire circumference of the winding when inserting basic conductors, it is preferable to hold the inserter fixed and rotate the circular winding containment in assembly. In many cases, only one circular containment can be used for both assembly and winding calibration and tightening. According to the present invention, two movements can be made with circular containment (as shown in Figures 10 and 11): the rotary motion 500r of the entire circular containment and the motion 500s on an arc of circumference to move the cams (as described in greater details below) in the body of the circular containment 520, which radially advances the positioners of the circular containment. Different means for the radial movement of positioners can be provided.

The positioning of the circular containment 500 above the rotary table 300 and especially the choice of rotating the circular containment when assembling the winding involves the use of circular containment rotating means, which can be realized in many different ways.

For example, one possible choice is to provide holes 912 (engagement holes, see Figures 12 and 14) on the base of the circular containment to allow the pins 918 (shown in Figure 14) of the drive system to be capable of engaging the circular containment itself. The cam 910 will also move from underneath the circular containment with pins 911 connected to a fork coaxial with the drive assembly 955 of the entire circular containment. See also Figure 14, engagement pin 911, for the position of the cams 910. The cam can be moved by the system 916 shown in Figure 23.

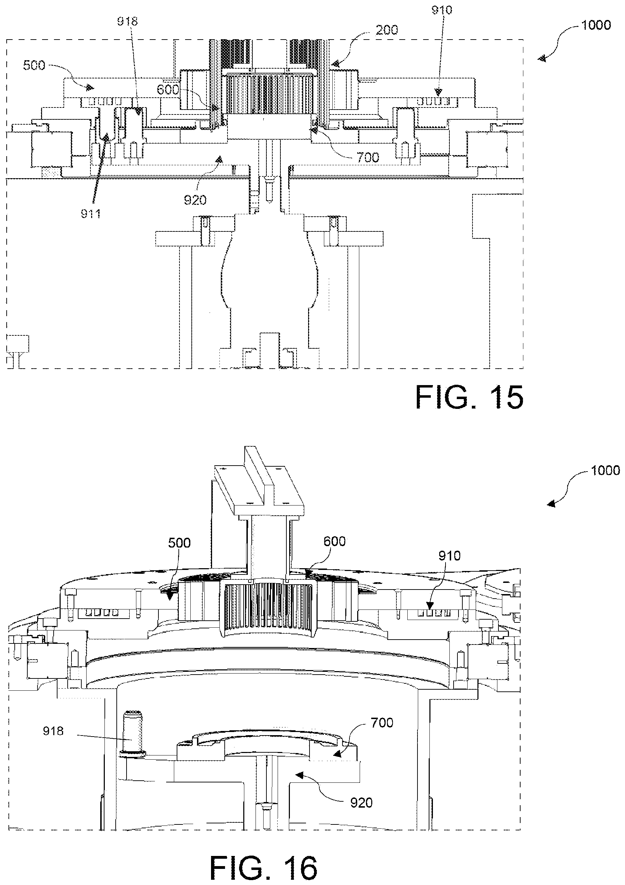

The base plate 520 of the circular containment in Figure 14 has two (/one or more) recesses 925 into which two (/respective) pins 918 are inserted (Figures 14-16) at 180°, which are used to transmit the rotation of the entire circular containment from the rotation means 950 (Figure 23); furthermore, there are two (/one or more) slits 913 from which two (/respective) pins 911 connected to the cam protrudes. With a relative movement between the cam pins 911 and the base plate 520, for example, it is possible to manage the rotation of the cam and thus the radial movement of the positioners. Reference numeral 920 indicates the drive assembly which rotates the base plate 520.

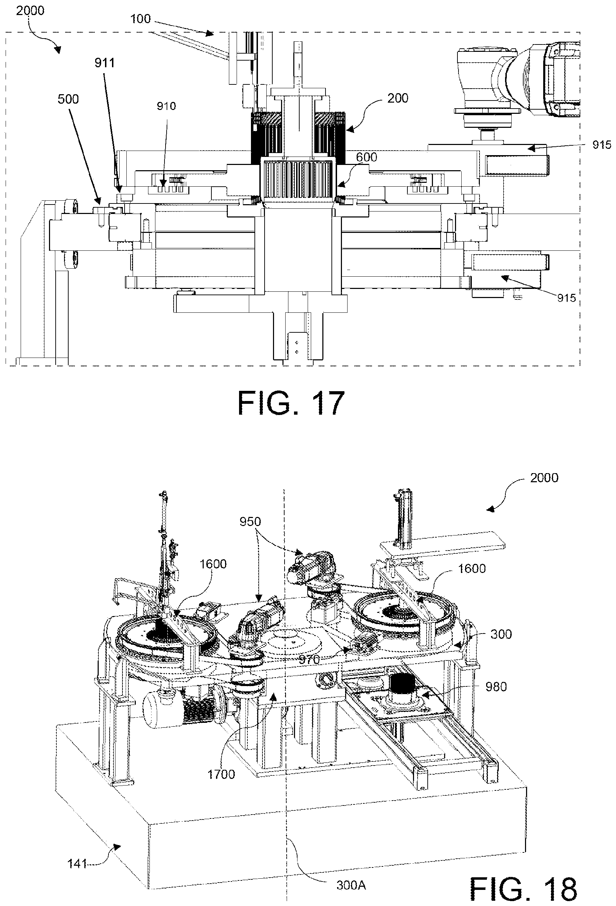

From the study of process steps, it has been seen that at the winding assembly work station on the rotary table, it is necessary to perform both movements 500r and 500s (Figure 10), in which the movement 500r is used for rotating the entire containment system for the insertion of the basic conductors, and the movement 500s need not necessarily be of 360°, it is used for radially moving the individual positioners both at the first assembly work station and preliminarily at the work station for the insertion into the stator pack. In the inserting work station of the winding into the stator pack, only the cam movement can suffice (although for the insertion of some special basic conductors, it is preferable to provide both movements). This has led to the conclusion that it is preferable (as in Figures 17, 18, and 24) to place the cam movement assembly aboard the motor 950 (with reduction gear 951 and belt tensioners 941) of the rotary table to avoid repeated insertions and removals for transfer, and it is also possible to take advantage of the above assembly to hold the cam stationary during the table rotation.

### Single motor integral with the rotary table

Referring to the embodiment 2000 in Figure 17, in order to reduce the number of motors used, since the movement of the cam is short compared to the movement of the circular containment body, an insertion and removal system of the pulley 915 connected to the circular containment body can be inserted, thus transmitting motion only to the cam while holding the circular containment body stationary.

This embodiment 2000 can be realized by using an electrically controlled brake connected to the pulley of the circular containment body, or by taking advantage of an electromagnetic clutch (not shown).

The operation of the solution 2000 (combinable with the solution 1000) with a single motor integral with the rotary table can be diagrammatically illustrated in several successive steps:
- Lifting and coupling the support surface 700 to the movement system of the circular containment body 520 (pneumatic locking retracts);
- Starting the assembly of the winding 200 with rotation of the circular containment body 520 and the cam 910;
- Activating the pneumatic locking at the end of assembly and deactivation of the electromagnetic brake;
- Lowering the support surface 700 slightly to facilitate the insertion of conductors into the stator pack 400, to which an electric-type drive is required;
- Rotating the cam 910 for tightening the winding 200;
- Lowering the support surface 700 totally;
- Rotating the rotary table 300;
- Lifting the stator pack 400 to feed the conductors;
- Rotating the cam 910 to a vertical guiding position;
- Thrusting the stator pack 400 from below (or vice versa thrusting the basic conductors from above) to insert the winding 200 into the stator pack;
- Rotating the cam 910 for full opening;
- Lowering the stator pack 400 with the winding 200 inserted;
- Repositioning the cam 910 during assembly; and
- Rotating the rotary table 300.

The advantages presented by the solution 2000 are the possibility of rotating the circular containment in the winding insertion station; this makes it easier to reach different positions on which to work with special hairpins and to position the winding at any angular position with respect to the stator pack; the use of a single electric motor for the circular containment body and the cam, eliminating weights on the rotary table; as well as the reduction of the overall dimensions under the rotary table.

### Detailed description of a preferred embodiment

Solution 2000 is a preferred embodiment according to the invention because it is efficient in achieving the purposes of the invention.

Optionally, one motor is used to rotate both the circular containment body 520 and the cam 910. As mentioned above, an electromagnetic clutch will be capable of inserting or removing one of the two motion-transmitting pulleys 915.

A diagrammatic version of the solution is configured as in the overall view in Figure 18.

Embodiments of each of the assemblies which form the global system (excluding the inserter, which as mentioned above can be of any type) will be illustrated in detail in the following.

### Rotary table assembly

As seen, a rotary table 300 has been chosen to work, e.g., on two stations, one for assembling winding under the inserter 100 and the other for inserting the winding into the stator pack 400, at the same time with very short rotation times of the table. It is preferable to rotate the table by 180° in one direction and then in the opposite direction so as to avoid complicated electric and pneumatic connection systems. In all embodiments of the present invention, the two (or more) stations can be housed in corresponding holes 310, 320 of the rotary table.

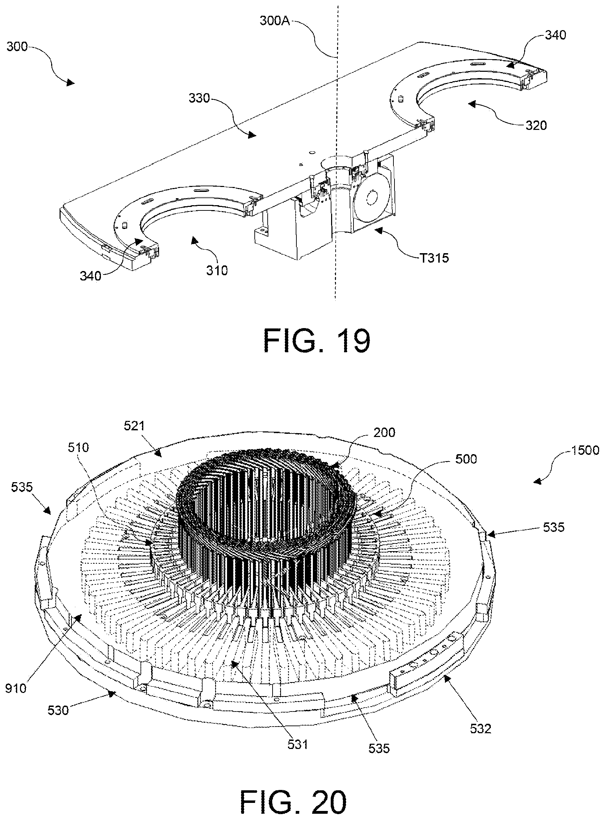

One rotating element which can be considered is, for example, the element TR315 made by Bettinelli shown in Figure 19, on which a work surface 330 was mounted made (for example) with two linear cuts from a circumference with a diameter of about 1900 mm and with two holes 310 and 320 to house the circular containment at the two work stations. A cross roller bearing 340 can be housed on each hole, such as the THK RB45025 bearing to the top of which a plate is connected on which the circular containment is connected.

The table 330 can also be configured to house the storage (not shown) of any special basic conductors to be inserted into the transfer station.

### Circular containment assembly

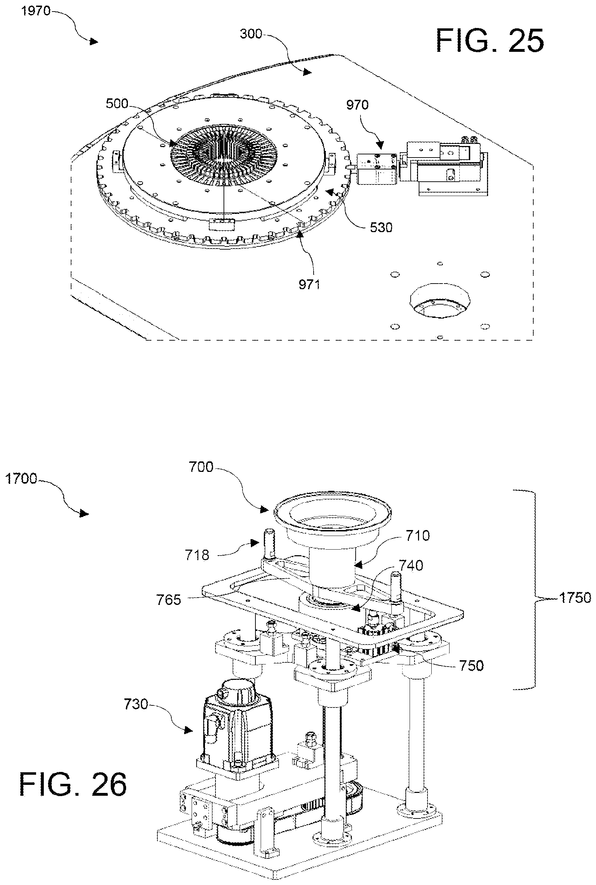

The circular containment assembly 1500, shown in Figure 20, can comprise one or more of the following elements:
- a base plate 530, externally provided with notches (toothing, shown in Figure 25) for the pneumatic locking of the circular containment in one of 48 desired positions (even number, multiple, or dividend of the number of slots of the stator pack being processed);
- a cam 910, which, by rotating, moves the walls of the circular containment
- a cover 521, appropriately designed for the function of guiding the positioners 510;
- as many positioners 510 as the slots in the stator pack to recreate a pack-like structure;
- sliders 531, which transmit motion to the positioners and are preferably equipped with springs (not shown); and
- a connection for the transmission 532 with which a specific element is engaged, which allows the movement thereof (toothed wheel or belt pulley or other) configured to rotate the cam.

The circular containment 500 is connected by means of the base plate 530 on the rotary table 300 (not shown in the figure) and is free to rotate.

As the thickness of the positioners 510 (the part in contact with the conductors) increases radially, rotating the cam it is possible to form stator-like slots, more or less narrow than them. Hence, the concept is to recreate wider slots during assembly and then narrower slots to align the basic conductors, with obvious advantages in the simplicity and effectiveness of assembly and winding insertion into the stator pack.

The positioners can be conveniently guided by special guides provided in a plate cover element 521 (not shown). These guides can allow a given stroke to be maintained in all steps of operation.

The cam 910 is provided with external protrusions 532 onto which the pulley or wheel, which puts it in rotation, is supported and fixed.

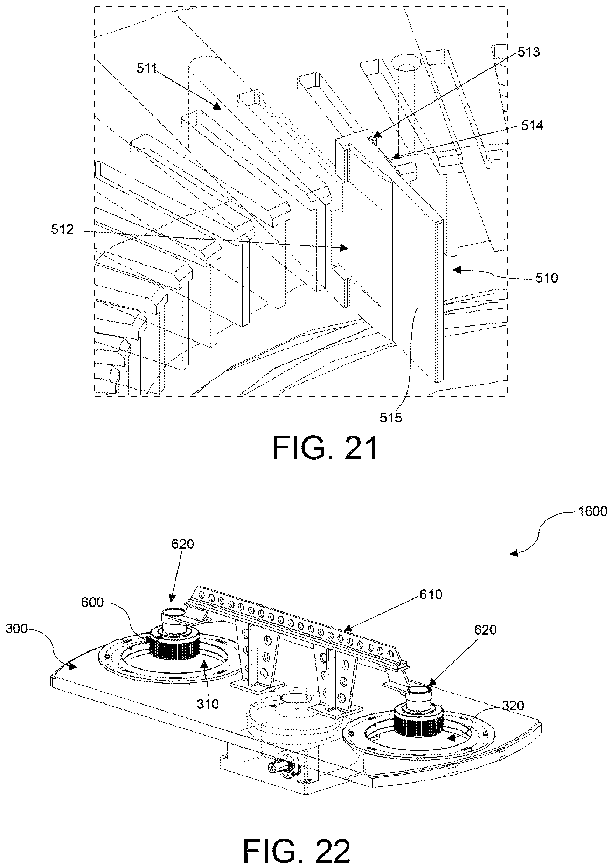

Looking in detail at the positioner 510 in Figure 21 (and in any embodiment), it can be guided into a respective block 511 through springs (see above, for a better tangential grip).

The positioner 510 can also be shaped to have in section a first portion of the radially inner end with a fixed thickness 515 and then a second tapered (wedge-shaped) portion 514 toward the radially outer end.

Advantageously, the second portion has a first sub-portion with a first sub-length having a first tapering angle and a second sub-portion, contiguous to said first sub-portion, with a second sub-length having a second tapering angle.

Preferably, wherein each positioner 510 has, in at least said second sub-portion, along the direction 200A of the winding axis, a first end and a second vertical end, wherein at said first vertical end there is a first vertical portion with said tapering and at said second vertical end there is a second vertical portion with said tapering, and wherein there is a central portion 512 without tapering between said first and second vertical portions with said tapering.

In addition, a T-shaped shoulder 513 can be included, for example, at its outer radial end to bundle the conductors radially.

### Inner containment support assembly

The optional inner containment support assembly 1600 shown in Figure 22, can comprise two main subassemblies: a fixed support 610 integral with the rotary table 300 and a support structure 620, which can be equipped according to the size of the winding to be processed.

The tooling structure 620 comprises an inner containment 600 with circular geometry which is used to give the reference of the inner diameter of the winding. It thus facilitates the insertion into the stator pack and has as many slots as the walls of the positioners so as to be crossed by the latter.

For example, the inner containment 600 (adapted not to keep the basic conductors of the winding from falling radially inward) is supported by means of a support (or basket) 620 rigidly connected to the fixed support 610, which connects the two assembly and insertion positions on the rotary table in the 180° configuration.

### Circular containment motor unit

The motor unit of the circular containment 1950, shown in Figure 23, is the assembly that allows both the entire circular containment 500 and the cam 910 only to rotate; this is made possible by virtue of the electromagnetic clutch 960, which engages and disengages the rotations of the two pulleys 940 or toothed wheel 931-934 (see Figure 24) for the transmissions.

It is possible to provide the device according to the invention with transmission means (e.g., above the rotary table), which are used to put the inner cam and the circular containment into rotation and are constantly connected to the motor. These transmission means can, for example, be made with a single motor to whose shaft the rotational part of the circular containment is connected, whereas the rotational part of the cam is implemented, when necessary, by means of independent connection to the shaft with mechanisms, such as an electrically controlled clutch.

### Circular containment locking assembly

The optional pneumatic locking assembly 1970, shown in Figure 25, is used to lock the circular containment 500 when the electromagnetic clutch decouples the transmission with respect to the body 520 of the circular containment, which would then be in danger of moving.

The pneumatic lock 970 is designed in a normally closed configuration and thus must be operated to release the circular containment, for safety issues.

The lock can be placed on top of the table 300 and can act directly on the base plate 530 of the circular containment, on the outer circumference of which positioning notches 971 are made in number equal to or a multiple of the number of stator slots, this allows locking the circular containment at least at each slot pitch.

Advantageously, when assembling the system, the locking assembly can be aligned with the notches on the circular containment since an error in doing so would result in displacement of the body of the circular containment when the clutch is deactivated and the pneumatic lock is activated, and consequently, there would be a step error between the upper and lower transmissions. At this point, it is advantageous to provide at least one angular adjustment of the pneumatic locking unit.

If the accuracy of a pneumatic locking device 970 is too low for a specific application, or the precautions to be applied are too sophisticated, an electromagnetic-type brake can also be used along with a clutch. In this manner, the brake would always be activated before the clutch (with the circular containment stationary) with the advantage that, once the clutch is deactivated, the brake would have no settling problems but would remain exactly still. The clutch is reactivated and the brake is deactivated to re-engage the transmission of the circular containment body.

Such a solution would not only allow for more precise control with quick and easy commands but also releasing the clamping system from the angular position of the circular containment body, saving costs as compared to additional machining operations on the base plate.

### Support surface assembly

The support and movement surface assembly 1700, shown in Figure 26, is placed on the ground under the rotary table and plays the role of supporting the basic conductors from below when assembling the winding.

It has been seen that it is preferable to have a system capable of handling different lifting heights both in the case of winding format change and during the winding steps of the winding, therefore an electric movement (or electric lifting system) 730 connected by means of a belt drive to a worm screw that moves a plate in a vertical direction (not shown) is preferred.

In the movable subassembly 1750, by means of a bearing, a support 765 being free to rotate with respect to the lifting system, is connected and equipped with pins 720 that allow it to couple to the circular containment where related bushings are housed (they are like 911 in figure 12 and are used to drive in rotational motion the entire idle support assembly). There can also be an idle support system 740 of the lifting system, as well as a pneumatic locking system 750 in place.

Indeed, when assembling the winding, the support surface 700 will be connected to the circular containment by means of the aforesaid support and will rotate with the containment itself. Once the assembly is finished, the walls of the circular containment advance and tighten the winding against the inner containment then the support surface 700 lowers and its support decouples from the circular containment. A pneumatic cylinder 710 locks the support surface support in the reference position to which it must be returned before lowering.

It is also possible to manage the height at which the winding must be tightened, which will be the most convenient for transfer into the stator pack, by moving the support surface 700 before the circular containment advances to the tightening position. Therefore, the length of the pins 718 (see above) must be such that the basic conductors can be supported at different elevations without losing connection with the circular containment transmission.

The support surface 700 will be capable of advantageously tracing the projection of the insertion-side basic conductors for effective support. It is actually possible to simplify the support surface if the difference between the basic conductors is a few millimeters because having a support surface with precise notches for each basic conductor and then not being sure of the placement of those conductors would not make sense. Furthermore, having on the insertion side of the basic conductors a nape that is not perfectly horizontal poses no problems for winding assembly.

Instead, it is advantageous to make notches where considerably longer terminals such as step terminals or jumpers are placed and create chamfers so as to facilitate their insertion.

For example, the stroke of the lifting system thus made can be about 200mm, which is sufficient to manage windings with heights on the order of 300-350mm (in the PDT step).

### Winding thrusting assembly

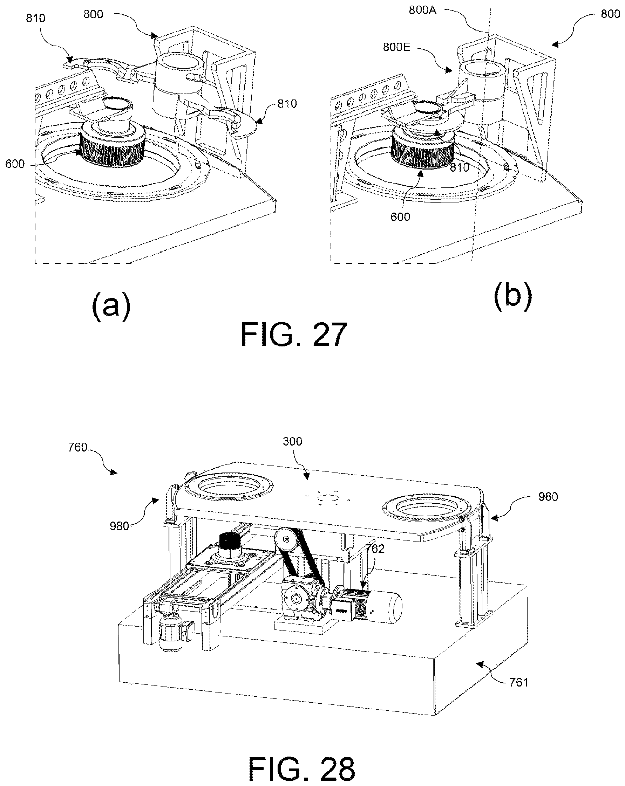

The winding thrust assembly 800, shown in Figure 27, is intended to thrust the basic conductors into the stator pack when the conductor terminals have already been inserted into the stator pack.

It is designed to thrust the basic conductors from the top down through a single plane which thrusts all the conductors at the same time, and thus also plays the role of bringing the nape onto a single horizontal plane.

The suggested solution comprises an electric axis (not fully shown) that moves a plate (not shown) on which the entire thrust assembly 800 is connected.

The thrust assembly 800 can comprise means for opening and closing half-rings 810 to avoid interference with other elements. The thrust means 800, 810 comprise means 800E configured to move two half-discs 810 on a plane perpendicular to the winding axis from an open position to a closed position in which they form a single thrust disc of said head ends.

### Base frame assembly

The base frame assembly 760, shown in Figure 28, must take the rotary table 300 and all elements interacting therewith to a reference height.

The base frame assembly (one of the possible embodiments) is constructed from an electrically welded structure 761.

The centering rollers and the stator pack lifter (not shown) of the table 980 can be fixed to this base frame, while the rotation motor of the table 762 can be placed under the rotary table 300.

Two or more of the parts (elements, devices, systems) described above can be freely associated and considered as part kits according to the invention.

### LIST OF REFERENCE SIGNS

100 - inserter
200 - basic conductor winding
200A - winding axis
210 - means for feeding the basic conductor layers 1 and 2 to the inserter
220 - means for feeding the basic conductor layers 3 and 4 to the inserter
230 - means for feeding the basic conductor layers 5 and 6 to the inserter
300 - rotary table
300A - rotary table rotation axis
310 - first work station hole
320 - second work station hole
330 - rotary table worktop
340 - cross roller bearing
400 - stator pack
400I - input stator
400F - output stator
1500 - circular containment assembly
500 - (central) circular containment
500r - rotary movement of circular containment
500s - limited angular movement of the circular containment body
510 - circular containment blade or positioner
511 - positioner housing block
512 - constant thickness portion of the positioner
513 - T-shaped shoulder at the radially outer end of the positioner
514 - thickening or flaring of the positioner walls
515 - wall portion at the inner radial end of the positioner having constant
thickness
520 - circular containment body
521 - circular containment cover
530 - circular containment base plate
531 - positioner slider for cam movement
532 - connection with transmissions
550 - slots
540 - upper circular containment
580 - lower circular containment
1600 - inner containment assembly
600 - inner containment
610 - inner containment support
620 - inner containment support structure (or basket)
1700 - support surface assembly
700- support surface
710 - pneumatic cylinder
720 - lifting system pins of the support surface
730 - electric lifting system
740 - idle support system
750 - pneumatic position locking system
760 - base frame assembly
761 - electrically welded base structure
762 - table rotation motor
765 - free support
800 - winding thrust assembly
800E - electric axis
810 - winding thrust half-discs
800A - rotation axis of the electric axis
900 - movement assembly
910 - cam
911- cam pins
912 - engagement holes
913 - slits
915 - pulley
916 - cam transmission system
917 - circular containment body transmission system
918 - base plate pins
920 - drive
925 - holes for pins 918
955 - circular containment drive assembly
1950 - circular containment motor assembly
940 - belt
941- belt tensioners
950 - circular containment motor
951 - reduction gear
960 - electromagnetic clutch
931 - primary gear (cam pinion)
932 - secondary gear (cam crown)
933 - additional primary gear (circular containment body pinion)
934 - further secondary gear (circular containment body crown)
1970 - pneumatic locking assembly of the circular containment
970 - pneumatic locking
971 - locking positioning notches
980 - stator pack centering rollers
1000 - first embodiment for the movement of the circular containment
2000 - further embodiment for the movement of the circular containment

Preferred embodiments have been described above and some variants of the present invention have been suggested, but it is understood that those skilled in the art may make modifications and changes without departing from the related scope of protection, as defined by the appended claims.

## Claims

1. An assembly and insertion system (1000,2000) for assembling and inserting into a stator pack (400) a stator winding (200) comprising one or more layers, each layer consisting of a circumferential arrangement of basic conductors (255, 255-R, 255-IP, 255-IVP), the basic conductors comprising a head end and one or more legs with a respective free insertion end, the assembly and insertion system (1000,2000) comprising:
- circumferential containment means (500,540,580) of the basic conductors (255, 255-R, 255-IP, 255-IVP) for the assembling the winding (200), the circumferential containment means defining a set of spaces or slots (550) into which inserting the legs of the basic conductors, the angular distance between two slots being referred to as a slot pitch;
- removable insertion means (210,220,230) for inserting the basic conductors (255, 255-R, 255-IP, 255-IVP) into said circumferential containment means (500,540,580); and
- rotating means for rotating the circumferential containment means (500,540,580) about the winding axis (200A), said rotating means being configured to perform rotations of one or more slot pitches about the winding axis (200A);
the assembly and transfer system (1000,2000) further comprising a rotary table (300) with a first housing hole housing the circumferential containment means, wherein
- the rotary table has a first table surface and a second table surface axially (300A) opposite to said first surface;
- the circumferential containment means (500,540,580) are configured to receive said basic conductors starting from said free ends, on the side of said first table surface in the assembly position;
the assembly and transfer system (1000,2000) being **characterized in that**:
- the rotary table is configured to rotate about a table axis (300A) so as to bring the circumferential containment means (500,540,580) from a winding assembly position (200) to a winding insertion position for the insertion of the winding into the stator pack (400);
- feeding means of a stator pack (400) from the side of said second table surface at the insertion position are included, said stator pack comprising a set of stator pack slots; and
- relative introduction means for the relative introduction of said winding (200) into said stator pack (400) with relative approaching motion between the winding and the stator pack in said insertion position are included;
wherein the circumferential containment means (500,540,580) comprise a set of positioners (510) arranged circumferentially and configured to slide radially, wherein a space or slot (550) of said set of spaces or slots is defined between each successive pair of positioners.

2. A system according to claim 1, wherein a second housing hole in which second circumferential containment means are housed is comprised, the second housing hole being arranged at 180° from said first housing hole about said table axis (300A).

3. A system according to claim 1 or 2, wherein means for positioning and removing the stator pack after the insertion of the winding are included.

4. A system according to any one of the claims from 1 to 3, wherein a section perpendicular to the winding axis (200A) of each positioner (510) comprises a radially outwardly tapered portion.

5. A system according to claim 4, wherein each positioner (510) has a first radially inner end and a second radially outer end, and wherein a first portion (515) of said section with a first length starting from said first radially inner end has no tapering, and a second portion with a second length starting from said first portion to said second radially outer end is the outwardly tapered portion (514).

6. A system according to claim 5, wherein said second portion has a first sub-portion with a first sub-length having a first tapering angle and a second sub-portion, contiguous to said first sub-portion, with a second sub-length having a second tapering angle.

7. A system according to claim 5 or 6, wherein a "T"-shaped shoulder (513) is provided at said second radially outer end.

8. A system according to claim 6, wherein each positioner (510) has, in at least said second sub-portion, along the direction (200A) of the winding axis, a first vertical end and a second vertical end, wherein at said first vertical end there is a first vertical portion with said tapering and at said second vertical end there is a second vertical portion with said tapering, and wherein there is a central portion (512) without tapering between said first and second vertical portions with said tapering.

9. A system according to one or more of claims 1 to 8, wherein each positioner (510) is moved by cam means (910) which radially thrust the positioner upon the rotation of the circumferential containment (500,540,580).

10. A system according to one or more of claims 1 to 9, wherein the circumferential containment means (500,540,580) comprise first circumferential containment means (540) configured to act at a first end portion of said winding along the winding axis (200A), second circumferential containment means (580) configured to act at a second end portion of said winding along the winding axis (200A), opposite to said first end portion, as well as third circumferential containment means (500) configured to act between said first and said second end portions of said winding along the winding axis (200A).

11. A system according to one or more of claims 1 to 10, wherein an inner containment (600) of the winding (200) is provided in the assembly position and in the insertion position in the stator pack (400).

12. A system according to one or more of claims 1 to 11, wherein said relative introduction means comprise thrust means of the stator pack (400) toward the free ends of the basic conductors in said winding (200) until the legs of the basic conductors are introduced into the stator pack slots.

13. A system according to one or more of claims 1 to 11, wherein said relative introduction means comprise thrust means (800, 810) of the winding (200), configured to thrust the head ends of the basic conductors until the free ends of the basic conductors are introduced into the slots of the stator pack (400).

14. A system according to claim 13, wherein the thrust means (800, 810) comprise means (800E) configured to move two half-discs (810) on a plane perpendicular to the winding axis from an open position to a closed position in which they form a single thrust disc of said head ends.

15. A system according to one or more of claims 1 to 14, wherein the feeding means of a stator pack (400) are arranged in a straight line so as to then bring the stator pack from a first feeding position (400I) to a second insertion position (400) and finally to a third output position (400F).

16. A system according to one or more of claims 1 to 15, wherein a support surface (700) of the free ends of the basic conductors in the assembly position is provided on the side of the second table surface, the support surface (700) having a surface facing said second table surface, said facing surface being shaped so that the head ends of the basic conductors in the winding (200) are maintained at the same height along the winding axis (200A), and wherein the support surface (700) is configured to be axially removed from the side of said second table surface before the rotation of the rotary table (300) towards the insertion position into the stator pack (400).

17. An assembly and insertion process for assembling and inserting, into a stator pack (400) a stator winding (200) comprising one or more layers, each layer consisting of a circumferential arrangement of basic conductors (255, 255-R, 255-IP, 255-IVP), the basic conductors comprising a head end and one or more legs with a respective free insertion end, the assembly and insertion process comprising the following steps:
A. providing an assembly and insertion system for assembling and inserting a stator winding (200) into a stator pack (400) according to one or more of claims 1 to 16;
B. assembling the winding (200) in the assembly position by the removable insertion means (100,210,220,230) for inserting the basic conductors on the side of said first surface of the rotary table;
C. rotating the rotary table (300) until the winding (200) reaches the insertion position;
D. bringing a stator pack (400) at said second surface of the rotary table to the insertion position; and
E. introducing the winding (200) into the stator pack (400) with relative approaching motion between the winding and the stator pack.

## Patentansprüche

1. Montage- und Einführungssystem (1000, 2000) zur Montage und Einführung einer Statorwicklung (200), die eine oder mehrere Schichten umfasst, in ein Statorpaket (400), wobei jede Schicht aus einer Umfangsanordnung von Basisleitern (255, 255-R, 255-IP, 255-IVP) besteht, wobei die Basisleiter ein Kopfende und ein oder mehrere Schenkel mit jeweils einem freien Einführungsende umfassen, wobei das Montage- und Einführungssystem (1000, 2000) Folgendes umfasst:
- Umfangseinkapselungsmittel (500, 540, 580) der Basisleiter (255, 255-R, 255-IP, 255-IVP) zum Montieren der Wicklung (200), wobei die Umfangseinkapselungsmittel einen Satz von Zwischenräumen oder Schlitzen (550) definieren, in die die Schenkel der Basisleiter eingeführt werden, wobei der Winkelabstand zwischen zwei Schlitzen als Schlitzsteigung bezeichnet wird;
- entfernbare Einführungsmittel (210, 220, 230) zum Einführen der Basisleiter (255, 255-R, 255-IP, 255-IVP) in die Umfangseinkapselungsmittel (500, 540, 580); und
- Drehmittel zum Drehen der Umfangseinkapselungsmittel (500, 540, 580) um die Wicklungsachse (200A), wobei die Drehmittel zum Durchführen von Drehungen um eine oder mehrere Schlitzsteigungen um die Wickelachse (200A) konfiguriert sind;
wobei das Montage- und Transfersystem (1000, 2000) ferner einen Drehtisch (300) mit einem ersten Unterbringungsloch umfasst, in dem die Umfangseinkapselungsmittel untergebracht sind, wobei
- der Drehtisch eine erste Tischfläche und eine der ersten Fläche axial (300A) gegenüberliegende zweite Tischfläche aufweist;
- die Umfangseinkapselungsmittel (500, 540, 580) zum Aufnehmen der Basisleiter beginnend mit den freien Enden auf der Seite der ersten Tischfläche in der Montageposition konfiguriert sind;
wobei das Montage- und Transfersystem (1000, 2000) **dadurch gekennzeichnet ist, dass**:
- der Drehtisch zum Drehen um eine Tischachse (300A) konfiguriert ist, um die Umfangseinkapselungsmittel (500, 540, 580) aus einer Wicklungsmontageposition (200) in eine Wicklungseinführungsposition zur Einführung der Wicklung in das Statorpaket (400) zu bringen;
- Zuführmittel eines Statorpakets (400) von der Seite der zweiten Tischfläche an der Einführungsposition eingeschlossen sind, wobei das Statorpaket einen Satz von Statorpaketschlitzen umfasst; und
- relative Einbringungsmittel zur relativen Einbringung der Wicklung (200) in das Statorpaket (400) mit einer relativen Annäherungsbewegung zwischen der Wicklung und dem Statorpaket in der Einführungsposition eingeschlossen sind;
wobei die Umfangseinkapselungsmittel (500, 540, 580) einen Satz von Positionierern (510) umfassen, die in Umfangsrichtung angeordnet und zum radialen Gleiten konfiguriert sind, wobei zwischen jedem aufeinanderfolgenden Paar von Positionierern ein Zwischenraum oder Schlitz (550) des Satzes von Zwischenräumen oder Schlitzen definiert ist.

2. System nach Anspruch 1, wobei ein zweites Unterbringungsloch, in dem zweite Umfangseinkapselungsmittel untergebracht sind, umfasst ist, wobei das zweite Unterbringungsloch um 180° von dem ersten Unterbringungsloch um die Tischachse (300A) herum angeordnet ist.

3. System nach Anspruch 1 oder 2, wobei Mittel zum Positionieren und Entfernen des Statorpakets nach der Einführung der Wicklung eingeschlossen sind.

4. System nach einem der Ansprüche 1 bis 3, wobei eine Sektion senkrecht zu der Wicklungsachse (200A) jedes Positionierers (510) einen radial nach außen verjüngten Abschnitt aufweist.

5. System nach Anspruch 4, wobei j eder Positionierer (510) ein erstes radial inneres Ende und ein zweites radial äußeres Ende aufweist und wobei ein erster Abschnitt (515) der Sektion mit einer ersten Länge, die an dem ersten radial inneren Ende beginnt, keine Verjüngung aufweist, und ein zweiter Abschnitt mit einer zweiten Länge, die an dem ersten Abschnitt beginnt und zu dem zweiten radial äußeren Ende verläuft, der nach außen verjüngte Abschnitt (514) ist.

6. System nach Anspruch 5, wobei der zweite Abschnitt einen ersten Teilabschnitt mit einer ersten Teillänge, der einen ersten Verjüngungswinkel aufweist, und einen zweiten, mit dem ersten Teilabschnitt zusammenhängenden Teilabschnitt mit einer zweiten Teillänge aufweist, der einen zweiten Verjüngungswinkel aufweist.

7. System nach Anspruch 5 oder 6, wobei an dem zweiten radial äußeren Ende eine T-förmige Schulter (513) bereitgestellt ist.

8. System nach Anspruch 6, wobei jeder Positionierer (510) mindestens in dem zweiten Teilabschnitt entlang der Richtung (200A) der Wicklungsachse ein erstes vertikales Ende und ein zweites vertikales Ende aufweist, wobei sich an dem ersten vertikalen Ende ein erster vertikaler Abschnitt mit der Verjüngung befindet und sich an dem zweiten vertikalen Ende ein zweiter vertikaler Abschnitt mit der Verjüngung befindet und wobei sich zwischen dem ersten und zweiten vertikalen Abschnitt mit der Verjüngung ein Mittelabschnitt (512) ohne Verjüngung befindet.

9. System nach einem oder mehreren der Ansprüche 1 bis 8, wobei jeder Positionierer (510) durch Nockenmittel (910) bewegt wird, die den Positionierer bei der Drehung der Umfangseinkapselung (500, 540, 580) radial schieben.

10. System nach einem oder mehreren der Ansprüche 1 bis 9, wobei die Umfangseinkapselungsmittel (500, 540, 580) erste Umfangseinkapselungsmittel (540), die zum Wirken an einem ersten Endabschnitt der Wicklung entlang der Wicklungsachse (200A) konfiguriert sind, zweite Umfangseinkapselungsmittel (580), die zum Wirken an einem zweiten Endabschnitt der Wicklung entlang der Wicklungsachse (200A) gegenüber dem ersten Endabschnitt konfiguriert sind, sowie dritte Umfangseinkapselungsmittel (500), die zum Wirken zwischen dem ersten und dem zweiten Endabschnitt der Wicklung entlang der Wicklungsachse (200A) konfiguriert sind, umfassen.

11. System nach einem oder mehreren der Ansprüche 1 bis 10, wobei eine innere Einkapselung (600) der Wicklung (200) in der Montageposition und in der Einführungsposition im Statorpaket (400) bereitgestellt ist.

12. System nach einem oder mehreren der Ansprüche 1 bis 11, wobei die relativen Einbringungsmittel Schubmittel des Statorpakets (400) in Richtung der freien Enden der Basisleiter in der Wicklung (200) umfassen, bis die Schenkel der Basisleiter in die Statorpaketschlitze eingebracht sind.

13. System nach einem oder mehreren der Ansprüche 1 bis 11, wobei die relativen Einbringungsmittel Schubmittel (800, 810) der Wicklung (200) umfassen, die zum Schieben des Kopfendes der Basisleiter, bis die freien Enden der Basisleiter in die Schlitze des Statorpakets (400) eingebracht sind, konfiguriert sind.

14. System nach Anspruch 13, wobei die Schubmittel (800, 810) Mittel (800E) umfassen, die zum Bewegen von zwei Halbscheiben (810) auf einer Ebene senkrecht zu der Wicklungsachse aus einer offenen Position in eine geschlossene Position, in der sie eine einzelne Schubscheibe der Kopfenden bilden, konfiguriert sind.

15. System nach einem oder mehreren der Ansprüche 1 bis 14, wobei die Zuführmittel eines Statorpakets (400) in einer geraden Linie angeordnet sind, um das Statorpaket dann von einer ersten Zuführposition (4001) in eine zweite Einführungsposition (400) und schließlich in eine dritte Ausgabeposition (400F) zu bringen.

16. System nach einem oder mehreren der Ansprüche 1 bis 15, wobei in der Montageposition eine Stützfläche (700) der freien Enden der Basisleiter auf der Seite der zweiten Tischfläche bereitgestellt ist, wobei die Stützfläche (700) eine der zweiten Tischfläche zugewandte Fläche aufweist, wobei die zugewandte Fläche derart geformt ist, dass die Kopfenden der Basisleiter in der Wicklung (200) auf der gleichen Höhe entlang der Wicklungsachse (200A) gehalten werden, und wobei die Stützfläche (700) zum axialen Entfernen von der Seite der zweiten Tischfläche vor der Drehung des Drehtisches (300) in Richtung der Einführungsposition in das Statorpaket (400) konfiguriert ist.

17. Montage- und Einführungsverfahren zur Montage und Einführung einer Statorwicklung (200), die eine oder mehrere Schichten umfasst, in ein Statorpaket (400), wobei jede Schicht aus einer Umfangsanordnung von Basisleitern (255, 255-R, 255-IP, 255-IVP) besteht, wobei die Basisleiter ein Kopfende und ein oder mehrere Schenkel mit jeweils einem freien Einführungsende umfassen, wobei das Montage- und Einführungsverfahren die folgenden Schritte umfasst:
A. Bereitstellen eines Montage- und Einführungssystems zur Montage und Einführung einer Statorwicklung (200) in ein Statorpaket (400) gemäß einem oder mehreren der Ansprüche 1 bis 16;
B. Montieren der Wicklung (200) in der Montageposition durch die entfernbaren Einführungsmittel (100, 210, 220, 230) zum Einführen der Basisleiter an der Seite der ersten Fläche des Drehtisches;
C. Drehen des Drehtisches (300), bis die Wicklung (200) die Einführungsposition erreicht;
D. Bringen eines Statorpakets (400) an der zweiten Fläche des Drehtisches in die Einführungsposition; und
E. Einbringen der Wicklung (200) in das Statorpaket (400) mit einer relativen Annäherungsbewegung zwischen der Wicklung und dem Statorpaket.

## Revendications

1. Système d'assemblage et d'insertion (1000, 2000) pour assembler et insérer dans un bloc statorique (400) un enroulement statorique (200) comprenant une ou plusieurs couches, chaque couche étant constituée d'un agencement circonférentiel de conducteurs de base (255, 255-R, 255-IP, 255-IVP), les conducteurs de base comprenant une extrémité de tête et une ou plusieurs pattes avec une extrémité d'insertion libre respective, le système d'assemblage et d'insertion (1000, 2000) comprenant :
- des moyens de confinement circonférentiel (500, 540, 580) des conducteurs de base (255, 255-R, 255-IP, 255-IVP) pour l'assemblage de l'enroulement (200), les moyens de confinement circonférentiel définissant un ensemble d'espaces ou de fentes (550) dans lesquel(le)s insérer les pattes des conducteurs de base, la distance angulaire entre deux fentes étant appelée pas de fente ;
- des moyens d'insertion amovibles (210, 220, 230) pour l'insertion des conducteurs de base (255, 255-R, 255-IP, 255-IVP) dans lesdits moyens de confinement circonférentiel (500, 540, 580) ; et
- des moyens de rotation pour faire tourner les moyens de confinement circonférentiel (500, 540, 580) autour de l'axe d'enroulement (200A), lesdits moyens de rotation étant conçus pour effectuer des rotations d'un ou plusieurs pas de fente autour de l'axe d'enroulement (200A) ;
le système d'assemblage et de transfert (1000, 2000) comprenant en outre une table rotative (300) avec un premier trou de boîtier logeant les moyens de confinement circonférentiel, dans lequel
- la table rotative a une première surface de table et une seconde surface de table axialement (300A) opposée à ladite première surface ;
- les moyens de confinement circonférentiel (500, 540, 580) sont conçus pour recevoir lesdits conducteurs de base à partir desdites extrémités libres, du côté de ladite première surface de table en position d'assemblage ;
le système d'assemblage et de transfert (1000, 2000) étant **caractérisé en ce que** :
- la table rotative est conçue pour tourner autour d'un axe de table (300A) de manière à amener les moyens de confinement circonférentiel (500, 540, 580) d'une position d'assemblage d'enroulement (200) à une position d'insertion d'enroulement pour l'insertion de l'enroulement dans le bloc statorique (400) ;
- des moyens d'alimentation d'un bloc statorique (400) depuis le côté de ladite seconde surface de table au niveau de la position d'insertion sont inclus, ledit bloc statorique comprenant un ensemble de fentes de bloc statorique ; et
- des moyens d'introduction relative pour l'introduction relative dudit enroulement (200) dans ledit bloc statorique (400) avec un mouvement de rapprochement relatif entre l'enroulement et le bloc statorique dans ladite position d'insertion sont inclus ;
dans lequel les moyens de confinement circonférentiel (500, 540, 580) comprennent un ensemble de positionneurs (510) agencés circonférentiellement et conçus pour coulisser radialement, dans lequel un espace ou fente (550) dudit ensemble d'espaces ou fentes est défini entre chaque paire successive de positionneurs.

2. Système selon la revendication 1, dans lequel un second trou de boîtier dans lequel sont logés des seconds moyens de confinement circonférentiel est compris, le second trou de boîtier étant agencé à 180° dudit premier trou de boîtier autour dudit axe de table (300A).

3. Système selon la revendication 1 ou 2, dans lequel des moyens pour positionner et retirer le bloc statorique après l'insertion de l'enroulement sont inclus.

4. Système selon l'une quelconque des revendications 1 à 3, dans lequel une section perpendiculaire à l'axe d'enroulement (200A) de chaque positionneur (510) comprend une partie effilée radialement vers l'extérieur.

5. Système selon la revendication 4, dans lequel chaque positionneur (510) a une première extrémité radialement intérieure et une seconde extrémité radialement extérieure, et dans lequel une première partie (515) de ladite section ayant une première longueur partant de ladite première extrémité radialement intérieure n'est pas effilée, et une seconde partie ayant une seconde longueur partant de ladite première partie jusqu'à ladite seconde extrémité radialement extérieure est la partie effilée vers l'extérieur (514).

6. Système selon la revendication 5, dans lequel ladite seconde partie a une première sous-partie ayant une première sous-longueur ayant un premier angle effilé et une seconde sous-partie, contiguë à ladite première sous-partie, avec une seconde sous-longueur ayant un second angle effilé.

7. Système selon la revendication 5 ou 6, dans lequel un épaulement en forme de « T » (513) est prévu au niveau de ladite seconde extrémité radialement extérieure.

8. Système selon la revendication 6, dans lequel chaque positionneur (510) présente, dans au moins ladite seconde sous-partie, le long de la direction (200A) de l'axe d'enroulement, une première extrémité verticale et une seconde extrémité verticale, dans lequel, au niveau de ladite première verticale, se trouve une première partie verticale ayant ledit effilement et au niveau de ladite seconde extrémité verticale se trouve une deuxième partie verticale ayant ledit effilement, et dans lequel une partie centrale (512) sans effilement se trouve entre lesdites première et seconde parties verticales ayant ledit effilement.

9. Système selon une ou plusieurs des revendications 1 à 8, dans lequel chaque positionneur (510) est déplacé par des moyens à came (910) qui poussent radialement le positionneur lors de la rotation du confinement circonférentiel (500, 540, 580).

10. Système selon une ou plusieurs des revendications 1 à 9, dans lequel les moyens de confinement circonférentiel (500, 540, 580) comprennent des premiers moyens de confinement circonférentiel (540) conçus pour agir au niveau d'une première partie d'extrémité dudit enroulement le long de l'axe d'enroulement (200A), des deuxièmes moyens de confinement circonférentiel (580) conçus pour agir au niveau d'une seconde partie d'extrémité dudit enroulement le long de l'axe d'enroulement (200A), opposée à ladite première partie d'extrémité, ainsi que des troisièmes moyens de confinement circonférentiel (500) conçus pour agir entre ladite première et ladite deuxième partie d'extrémité dudit enroulement le long de l'axe d'enroulement (200A).

11. Système selon une ou plusieurs des revendications 1 à 10, dans lequel un confinement interne (600) de l'enroulement (200) est prévu dans la position d'assemblage et dans la position d'insertion dans le bloc statorique (400).

12. Système selon une ou plusieurs des revendications 1 à 11, dans lequel lesdits moyens d'introduction relative comprennent des moyens de poussée du bloc statorique (400) vers les extrémités libres des conducteurs de base dans ledit enroulement (200) jusqu'à ce que les pattes des conducteurs de base soient introduites dans les fentes du bloc statorique.

13. Système selon une ou plusieurs des revendications 1 à 11, dans lequel lesdits moyens d'introduction relative comprennent des moyens de poussée (800, 810) de l'enroulement (200), conçus pour pousser les extrémités de tête des conducteurs de base jusqu' à ce que les extrémités libres des conducteurs de base soient introduites dans les fentes du bloc statorique (400).

14. Système selon la revendication 13, dans lequel les moyens de poussée (800, 810) comprennent des moyens (800E) conçus pour déplacer deux demi-disques (810) sur un plan perpendiculaire à l'axe d'enroulement depuis une position ouverte vers une position fermée dans laquelle ils forment un seul disque de poussée desdites extrémités de tête.

15. Système selon une ou plusieurs des revendications 1 à 14, dans lequel les moyens d'alimentation d'un bloc statorique (400) sont agencés en ligne droite de manière à amener ensuite le bloc statorique d'une première position d'alimentation (400I) à une deuxième position d'insertion (400) et enfin vers une troisième position de sortie (400F).

16. Système selon une ou plusieurs des revendications 1 à 15, dans lequel une surface de support (700) des extrémités libres des conducteurs de base en position d'assemblage est prévue du côté de la seconde surface de table, la surface de support (700) présentant une surface faisant face à ladite seconde surface de table, ladite surface faisant face étant formée de façon que les extrémités de tête des conducteurs de base dans l'enroulement (200) soient maintenues à la même hauteur le long de l'axe d'enroulement (200A), et dans lequel la surface de support (700) est conçue pour être retirée axialement du côté de ladite seconde surface de table avant la rotation de la table rotative (300) vers la position d'insertion dans le bloc statorique (400).

17. Procédé d'assemblage et d'insertion pour assembler et insérer, dans un bloc statorique (400), un enroulement statorique (200) comprenant une ou plusieurs couches, chaque couche étant constituée d'un agencement circonférentiel de conducteurs de base (255, 255-R, 255-IP, 255-IVP), les conducteurs de base comprenant une extrémité de tête et une ou plusieurs pattes avec une extrémité d'insertion libre respective, le procédé d'assemblage et d'insertion comprenant les étapes suivantes :
A. fourniture d'un système d'assemblage et d'insertion pour assembler et insérer un enroulement statorique (200) dans un bloc statorique (400) selon une ou plusieurs des revendications 1 à 16 ;
B. assemblage de l'enroulement (200) en position d'assemblage par les moyens d'insertion amovibles (100, 210, 220, 230) pour insérer les conducteurs de base du côté de ladite première surface de la table rotative ;
C. rotation de la table rotative (300) jusqu'à ce que l'enroulement (200) atteigne la position d'insertion ;
D. amenée d'un bloc statorique (400) au niveau de ladite seconde surface de la table rotative vers la position d'insertion ; et
E. introduction de l'enroulement (200) dans le bloc statorique (400) avec un mouvement de rapprochement relatif entre l'enroulement et le bloc statorique.
